(19) Europäisches Patentamt
European Patent Office
Office européen des brevets

(11) **EP 4 372 420 A1**

(12) **EUROPEAN PATENT APPLICATION**
published in accordance with Art. 153(4) EPC

(43) Date of publication:
**22.05.2024 Bulletin 2024/21**

(21) Application number: **22842482.6**

(22) Date of filing: **14.07.2022**

(51) International Patent Classification (IPC):
*G01S 17/894* (2020.01)   *G01S 7/497* (2006.01)
*G06T 7/593* (2017.01)   *G06T 7/521* (2017.01)
*H04N 13/204* (2018.01)

(52) Cooperative Patent Classification (CPC):
**G01S 7/497; G01S 17/894; G06T 7/521;**
**G06T 7/593; H04N 13/204**

(86) International application number:
**PCT/KR2022/010283**

(87) International publication number:
**WO 2023/287220 (19.01.2023 Gazette 2023/03)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **15.07.2021 KR 20210092990**

(71) Applicant: **LG Electronics Inc.**
**Yeongdeungpo-gu**
**Seoul 07336 (KR)**

(72) Inventor: **OH, Hyunmook**
**Seoul 06772 (KR)**

(74) Representative: **Plasseraud IP**
**66, rue de la Chaussée d'Antin**
**75440 Paris Cedex 09 (FR)**

(54) **POINT CLOUD DATA TRANSMISSION METHOD, POINT CLOUD DATA TRANSMISSION DEVICE, POINT CLOUD DATA RECEPTION METHOD, AND POINT CLOUD DATA RECEPTION DEVICE**

(57) A point cloud data transmission method according to embodiments may comprise the steps of encoding point cloud data; and transmitting a bitstream including the point cloud data. In addition, a point cloud data transmission device according to embodiments may comprise: an encoder which encodes point cloud data; and a transmitter which transmits a bitstream including the point cloud data.

FIG. 1

**Description**

**TECHNICAL FIELD**

Embodiments relate to a method and apparatus for processing point cloud content.

**BACKGROUND ART**

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

**DISCLOSURE**

**Technical Problem**

Embodiments provide an apparatus and method for efficiently processing point cloud data. Embodiments provide a point cloud data processing method and apparatus for addressing latency and encoding/decoding complexity.
The technical scope of the embodiments is not limited to the aforementioned technical objects, and may be extended to other technical objects that may be inferred by those skilled in the art based on the entire contents disclosed herein.

**Technical Solution**

To achieve these objects and other advantages and in accordance with the purpose of the disclosure, as embodied and broadly described herein, a method of transmitting point cloud data may include encoding point cloud data, and transmitting a bitstream containing the point cloud data. A method of receiving point cloud data according to embodiments may include receiving a bitstream including the point cloud data and decoding the point cloud data.

**Advantageous Effects**

Apparatuses and methods according to embodiments may process point cloud data with high efficiency.
The apparatuses and methods according to the embodiments may provide a high-quality point cloud service.
The apparatuses and methods according to the embodiments may provide point cloud content for providing general-purpose services such as a VR service and a self-driving service.

**Brief Description of Drawings**

The accompanying drawings, which are included to provide a further understanding of the disclosure and are incorporated in and constitute a part of this application, illustrate embodiment(s) of the disclosure and together with the description serve to explain the principle of the disclosure.
For a better understanding of various embodiments described below, reference should be made to the description of the following embodiments in connection with the accompanying drawings. The same reference numbers will be used throughout the drawings to refer to the same or like parts. In the drawings:

FIG. 1 illustrates an exemplary point cloud content providing system according to embodiments;
FIG. 2 is a block diagram illustrating a point cloud content providing operation according to embodiments;
FIG. 3 illustrates an exemplary process of capturing a point cloud video according to embodiments;
FIG. 4 illustrates an exemplary point cloud encoder according to embodiments;
FIG. 5 illustrates an example of voxels according to embodiments;
FIG. 6 illustrates an example of an octree and occupancy code according to embodiments;
FIG. 7 illustrates an example of a neighbor node pattern according to embodiments;
FIG. 8 illustrates an example of point configuration in each LOD according to embodiments;
FIG. 9 illustrates an example of point configuration in each LOD according to embodiments;
FIG. 10 illustrates a point cloud decoder according to embodiments;
FIG. 11 illustrates a point cloud decoder according to embodiments;

FIG. 12 illustrates a transmission device according to embodiments;

FIG. 13 illustrates a reception device according to embodiments;

FIG. 14 illustrates an exemplary structure operable in connection with point cloud data transmission/reception methods/devices according to embodiments;

FIGS. 15a to 15d illustrate point cloud data acquired based on a LiDAR sensor according to embodiments;

FIG. 16 is a block diagram illustrating a point cloud data transmission device/method according to embodiments;

FIG. 17 is a block diagram illustrating a point cloud data reception device/method according to embodiments;

FIG. 18 schematically illustrates the structure of a LiDAR sensor for acquiring point cloud data according to embodiments;

FIG. 19 illustrates the position of a LiDAR sensor head and the position of a laser according to embodiments;

FIG. 20 illustrates an example of encoded point cloud data according to embodiments;

FIG. 21 illustrates an exemplary syntax of a sequence parameter set according to embodiments;

FIG. 22 illustrates an exemplary syntax of a tile inventory according to embodiments;

FIG. 23 illustrates an exemplary syntax of a general attribute slice bitstream and an exemplary syntax of an attribute slice header according to embodiments;

FIGS. 24a and 24b illustrate an exemplary syntax of projection information according to embodiments;

FIG. 25 illustrates an exemplary syntax of LiDAR information according to embodiments;

FIG. 26 illustrates an exemplary scan pattern through which a LiDAR sensor acquires point data cloud according to embodiments;

FIG. 27 illustrates a change in a bounding box based on information about a field of view (FoV) range of a LiDAR sensor according to embodiments;

FIG. 28 illustrates an example in which point cloud data acquired by a plurality of LiDAR sensors according to embodiments are synthesized;

FIGS. 29a and 29b exemplarily illustrate a point cloud data transmission device/method according to embodiments;

FIG. 30 illustrates an example of a point cloud data transmission method according to embodiments;

FIGS. 31a and 31b exemplarily illustrate a point cloud data reception device/method according to embodiments;

FIG. 32 illustrates an example of a point cloud data reception method according to embodiments;

FIG. 33 illustrates an example of a point cloud data transmission method according to embodiments; and

FIG. 34 illustrates an example of a point cloud data reception method according to embodiments.

## BEST MODE

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

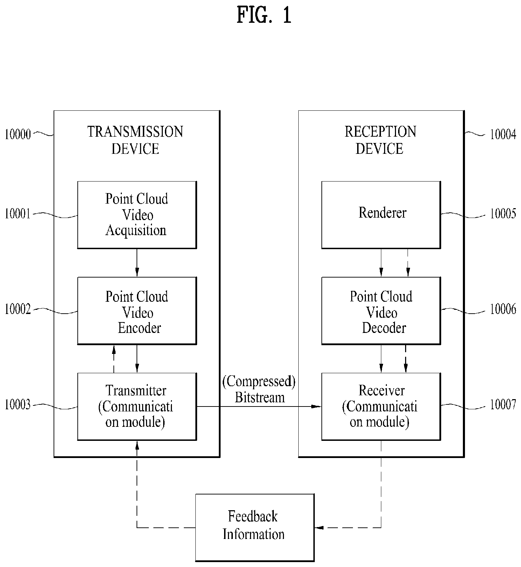

FIG. 1 illustrates an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data.

The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (for example, a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (for example, a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (for example, in a reverse process of the operation of the point cloud video encoder 10002). Accordingly, the point cloud video decoder 10006 may decode the point cloud video data by performing point cloud decompression coding, which is the inverse process of the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

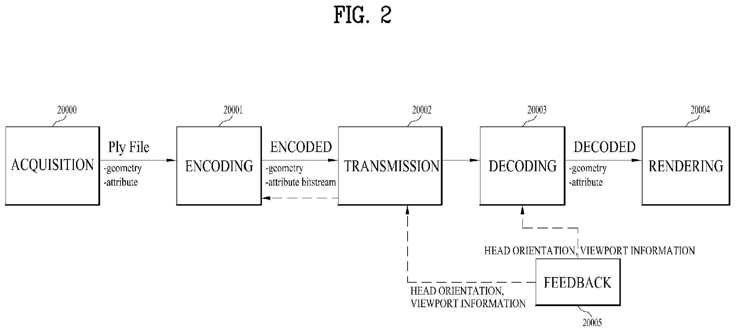

FIG. 2 is a block diagram illustrating a point cloud content providing operation according to embodiments.

The block diagram of FIG. 2 illustrates the operation of the point cloud content providing system described in FIG. 1. As described above, the point cloud content providing system may process point cloud data based on point cloud compression coding (e.g., G-PCC).

The point cloud content providing system according to the embodiments (for example, the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (for example, values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, or the like, and the attribute may be called attributes, attribute information, attribute data, or the like. The point cloud content providing system (for example, the point cloud transmission device 10000 or the point cloud video acquirer 10001) may secure point cloud data from information (e.g., depth information, color information, etc.) related to the acquisition process of the point cloud video.

The point cloud content providing system (for example, the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (for example, the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (for example, signaling information related to the geometry encoding and the attribute encoding). The point cloud content providing system may encapsulate a bitstream that carries the encoded point cloud data and transmit the same in the form of a file or segment.

The point cloud content providing system (for example, the reception device 10004 or the receiver 10005) according to the embodiments may receive the bitstream containing the encoded point cloud data. In addition, the point cloud content providing system (for example, the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (for example, the reception device 10004 or the point cloud video decoder 10005) may decode the point cloud video data based on the signaling information related to encoding of the point cloud video data contained in the bitstream. The point cloud content providing system (for example, the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (for example, the reception device 10004 or the point cloud video decoder 10005) may reconstruct the point cloud video based on the positions according to the reconstructed geometry and the decoded attributes.

The point cloud content providing system according to the embodiments (for example, the reception device 10004 or the renderer 10007) may render the decoded point cloud data (20004). The point cloud content providing system (for example, the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (for example, the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

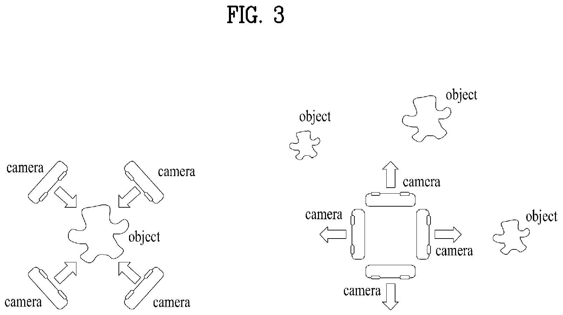

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in the figure, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (for example, a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

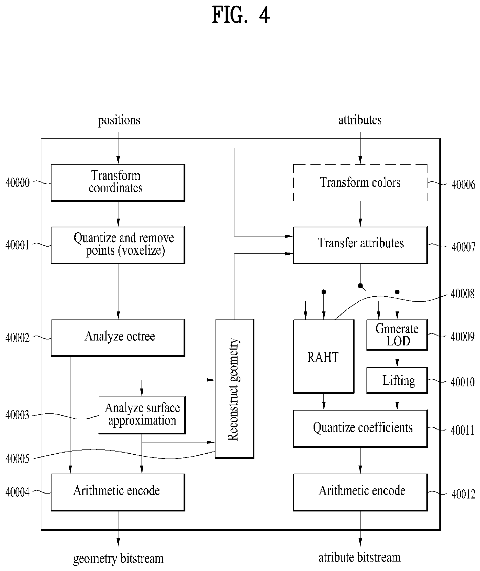

FIG. 4 illustrates an exemplary point cloud encoder according to embodiments.

FIG. 4 illustrates an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 to 2, the point cloud encoder may perform geometry encoding and attribute encoding. The geometry encoding is performed before the attribute encoding.

The point cloud encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometric reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (for example, a three-dimensional space represented by an XYZ coordinate system). The position information in the three-dimensional space according to the embodiments may be referred to as geometry information.

The quantizer 40001 according to the embodiments quantizes the geometry. For example, the quantizer 40001 may quantize the points based on a minimum position value of all points (for example, a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud encoder of FIG. 4 may be implemented by hardware including one or more processors or integrated circuits configured to communicate with one or more memories included in the point cloud providing apparatus, software, firmware, or a combination thereof. The one or more processors may perform at least one of the operations and/or functions of the elements of the point cloud encoder of FIG. 4 described above. Additionally, the one or more processors may operate or execute a set of software programs and/or instructions for performing the operations and/or functions of the elements of the point cloud encoder of FIG. 4. The one or more memories according to the embodiments may include a high speed random access memory, or include a non-volatile memory (e.g., one or more magnetic disk storage devices, flash memory devices, or other non-volatile solid-state memory devices).

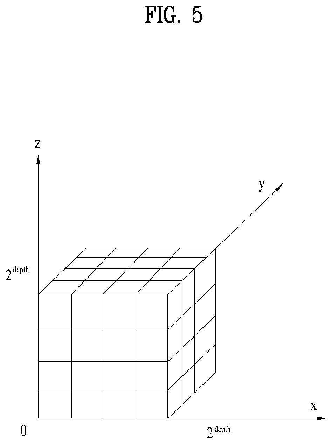

FIG. 5 illustrates an example of voxels according to embodiments.

FIG. 5 illustrates voxels positioned in a 3D space represented by a coordinate system composed of three axes, which are the X-axis, the Y-axis, and the Z-axis. As described with reference to FIG. 4, the point cloud encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 illustrates an example of voxels generated through an octree structure in which a cubical axis-aligned bounding box defined by two poles (0, 0, 0) and (2d, 2d, 2d) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

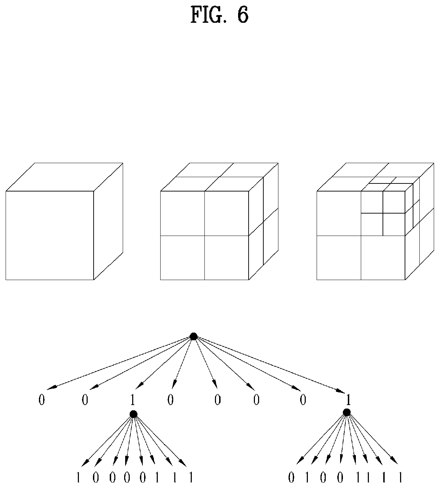

FIG. 6 illustrates an example of an octree and occupancy code according to embodiments.

As described with reference to FIGS. 1 to 4, the point cloud content providing system (point cloud video encoder 10002) or the point cloud encoder (for example, the octree analyzer 40002) performs octree geometry coding (or octree coding) based on an octree structure to efficiently manage the region and/or position of the voxel.

The upper part of FIG. 6 illustrates an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and ($2^d$, $2^d$, $2^d$). Here, 2d may be set to a value constituting the smallest bounding box surrounding all points of the point cloud content (or point cloud video). Here, d denotes the depth of the octree. The value of d is determined in the following equation. In the following equation, ($x^{int}_n$, $y^{int}_n$, $z^{int}_n$) denotes the positions (or position values) of quantized points.

$$\mathrm{d} = Ceil\left(Log2\left(Max\left(x_n^{int}, y_n^{int}, z_n^{int}, n = 1, \ldots, N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 illustrates an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (for example, the arithmetic encoder 40004) according to the embodiments may perform entropy encoding on the occupancy codes. In order to increase the compression efficiency, the point cloud encoder may perform intra/inter-coding on the occupancy codes. The reception device (for example, the reception device 10004 or the point cloud video decoder 10006) according to the embodiments reconstructs the octree based on the occupancy codes.

The point cloud encoder (for example, the point cloud encoder of FIG. 4 or the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 40004) according to the embodiments may perform entropy coding on the positions (or position values) of the points.

The point cloud encoder (for example, the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector (Δx, Δy, Δz) of the edge, and the vertex position value (relative position value within the edge). When the trisoup geometry encoding is applied, the point cloud encoder according to the embodiments (for example, the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

i)

$$\begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix}; \quad \text{ii)} \quad \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix}; \quad \text{iii)} \quad \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of θ is estimated through atan2(bi, ai), and the vertices are ordered based on the value of θ. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

Triangles formed from vertices ordered 1,...,n

n triangles
3 (1,2,3)
4 (1,2,3), (3,4,1)
5 (1,2,3), (3,4,5), (5,1,3)
6 (1,2,3), (3,4,5), (5,6,1), (1,3,5)
7 (1,2,3), (3,4,5), (5,6,7), (7,1,3), (3,5,7)
8 (1,2,3), (3,4,5), (5,6,7), (7,8,1), (1,3,5), (5,7,1)
9 (1,2,3), (3,4,5), (5,6,7), (7,8,9), (9,1,3), (3,5,7), (7,9,3)
10 (1,2,3), (3,4,5), (5,6,7), (7,8,9), (9,10,1), (1,3,5), (5,7,9), (9,1,5)
11 (1,2,3), (3,4,5), (5,6,7), (7,8,9), (9,10,11), (11,1,3), (3,5,7), (7,9,11), (11,3,7)
12 (1,2,3), (3,4,5), (5,6,7), (7,8,9), (9,10,11), (11,12,1), (1,3,5), (5,7,9), (9,11,1), (1,5,9)

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

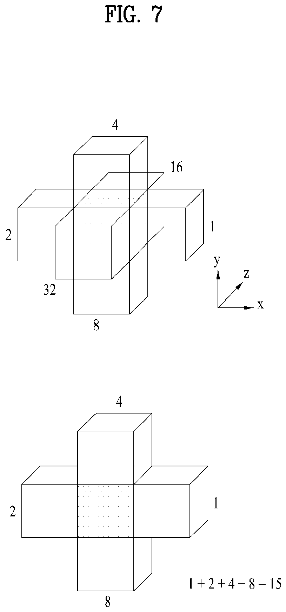

FIG. 7 illustrates an example of a neighbor node pattern according to embodiments.

In order to increase the compression efficiency of the point cloud video, the point cloud encoder according to the embodiments may perform entropy coding based on context adaptive arithmetic coding.

As described with reference to FIGS. 1 to 6, the point cloud content providing system or the point cloud encoder (for example, the point cloud video encoder 10002, the point cloud encoder or arithmetic encoder 40004 of FIG. 4) may perform entropy coding on the occupancy code immediately. In addition, the point cloud content providing system or the point cloud encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using $2^3 = 8$ methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud encoder according to the embodiments determines occupancy of neighbor nodes of each node of the octree and obtains a value of a neighbor pattern. The neighbor node pattern is used to infer the occupancy pattern of the node. The upper part of FIG. 7 illustrates a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The lower part of FIG. 7 illustrates neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud encoder may perform coding according to the neighbor node pattern value (for example, when the neighbor node pattern value is 63, 64 kinds of coding may be performed). According to embodiments, the point cloud encoder may reduce coding complexity by changing a neighbor node pattern value (for example, based on a table by which 64 is changed to 10 or 6).

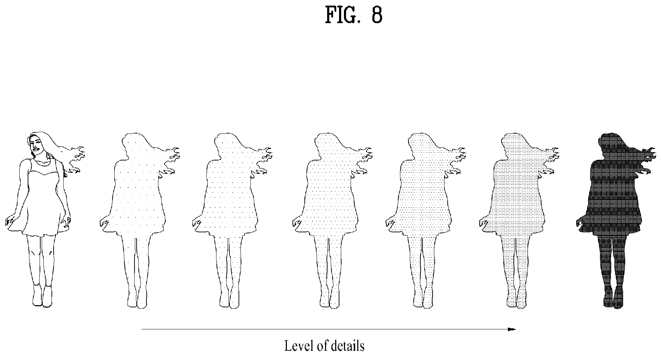

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (for example, the LOD generator 40009) may classify (reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

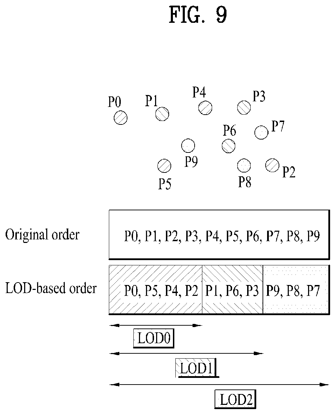

FIG. 9 illustrates an example of point configuration for each LOD according to embodiments.

As described with reference to FIGS. 1 to 8, the point cloud content providing system, or the point cloud encoder (for example, the point cloud video encoder 10002, the point cloud encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 9 illustrates examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (for example, the coefficient quantizer 40011) may quantize and inversely quantize the residuals (which may be called residual attributes, residual attribute values, or attribute prediction residuals) obtained by subtracting a predicted attribute (attribute value) from the attribute (attribute value) of each point. The quantization process is configured as shown in the following table.

[Table 1]

| Attribute prediction residuals quantization pseudo code |
|---|
| int PCCQuantization(int value, int quantStep) { |
| if( value >=0) { |
| return floor(value / quantStep + 1.0 / 3.0); |
| } else { |
| return -floor(-value / quantStep + 1.0 / 3.0); |
| } |
| } |

[Table 2]

| Attribute prediction residuals inverse quantization pseudo code |
|---|
| int PCCInverseQuantization(int value, int quantStep) { |
| if( quantStep ==0) { |
| return value; |
| } else { |

(continued)

| Attribute prediction residuals inverse quantization pseudo code |
|---|
| return value * quantStep; |
| } |
| } |

When the predictor of each point has neighbor points, the point cloud encoder (e.g., the arithmetic encoder 40012) according to the embodiments may perform entropy coding on the quantized and inversely quantized residual values as described above. When the predictor of each point has no neighbor point, the point cloud encoder according to the embodiments (for example, the arithmetic encoder 40012) may perform entropy coding on the attributes of the corresponding point without performing the above-described operation.

The point cloud encoder according to the embodiments (for example, the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 40011) according to the embodiments quantizes the predicted attribute values. In addition, the point cloud encoder (e.g., the arithmetic encoder 40012) performs entropy coding on the quantized attribute values.

The point cloud encoder (for example, the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l_{x,y,z}}$ denotes the average attribute value of voxels at level $l$. $g_{l_{x,y,z}}$ may be calculated based on $g_{l+1_{2x,y,z}}$ and $g_{l+1_{2x+1,y,z}}$. The weights for $g_{l_{2x,y,z}}$ and $g_{l_{2x+1,y,z}}$ are $w1 = w_{l_{2x,y,z}}$ and $w2 = w_{l_{2x+1,y,z}}$.

$$\begin{bmatrix} g_{l-1\,x,y,z} \\ h_{l-1\,x,y,z} \end{bmatrix} = T_{w1\,w2} \begin{bmatrix} g_{l\,2x,y,z} \\ g_{l\,2x+1,y,z} \end{bmatrix}, \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1_{x,y,z}}$ is a low-pass value and is used in the merging process at the next higher level. $h_{l-1_{x,y,z}}$ denotes high-pass coefficients. The high-pass coefficients at each step are quantized and subjected to entropy coding (for example, encoding by the arithmetic encoder 400012). The weights are calculated as $w_{l-1_{x,y,z}} = w_{l_{2x,y,z}} + w_{l_{2x+1,y,z}}$. The root node is created through the $g_{1_{0,0,0}}$ and $g_{1_{0,0,1}}$ as follows.

$$\begin{bmatrix} gDC \\ h_{0_{0,0,0}} \end{bmatrix} = T_{w1000\,w1001} \begin{bmatrix} g_{1_{0,0,0z}} \\ g_{1_{0,0,1}} \end{bmatrix}$$

The value of gDC is also quantized and subjected to entropy coding in the same manner of the high-pass coefficients.

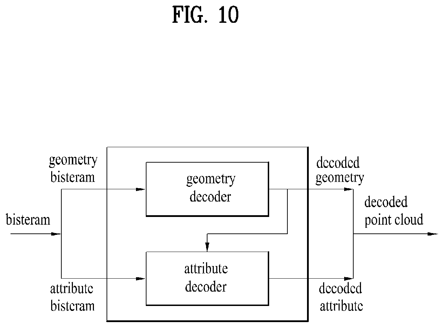

FIG. 10 illustrates a point cloud decoder according to embodiments.

The point cloud decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud decoder may receive a geometry bitstream and an attribute bitstream contained in one or more bitstreams. The point cloud decoder includes a geometry decoder and an attribute decoder. The geometry decoder performs geometry decoding on the geometry bitstream and outputs decoded geometry. The attribute decoder performs attribute decoding based on the decoded geometry and the attribute bitstream, and outputs decoded attributes. The decoded geometry and decoded attributes are used to reconstruct point cloud content (a decoded point cloud).

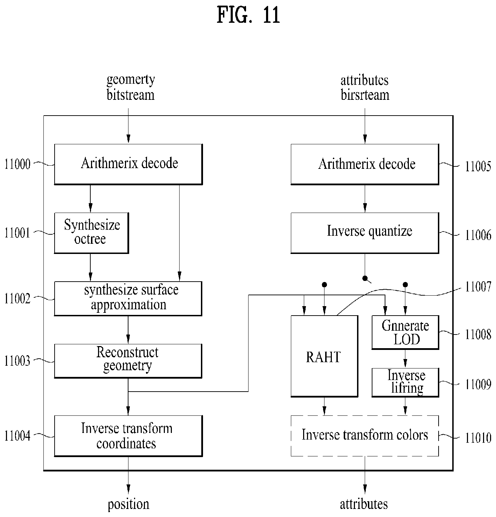

FIG. 11 illustrates a point cloud decoder according to embodiments.

The point cloud decoder illustrated in FIG. 11 is an example of the point cloud decoder illustrated in FIG. 10, and may perform a decoding operation, which is a reverse process of the encoding operation of the point cloud encoder illustrated in FIGS. 1 to 9.

As described with reference to FIGS. 1 and 10, the point cloud decoder may perform geometry decoding and attribute decoding. The geometry decoding is performed before the attribute decoding.

The point cloud decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct coding and trisoup geometry decoding. The direct coding and trisoup geometry decoding are selectively applied. The geometry decoding is not limited to the above-described example, and is performed as a reverse process of the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the inverse process of the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud encoder.

Although not shown in the figure, the elements of the point cloud decoder of FIG. 11 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 11 described above. Additionally, the one or more processors may operate or execute a set of software programs and/or instructions for performing the operations and/or functions of the elements of the point cloud decoder of FIG. 11.

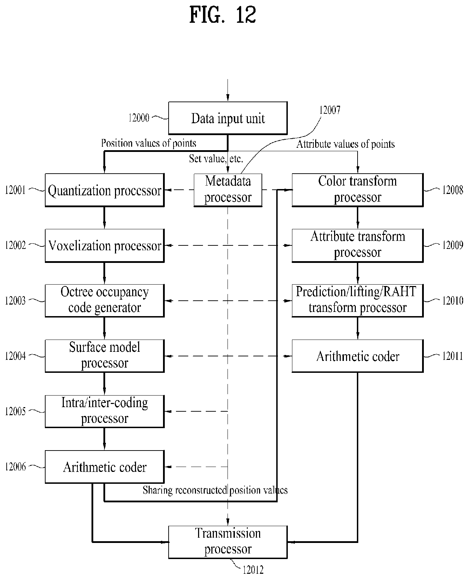

FIG. 12 illustrates a transmission device according to embodiments.

The transmission device shown in FIG. 12 is an example of the transmission device 10000 of FIG. 1 (or the point cloud encoder of FIG. 4). The transmission device illustrated in FIG. 12 may perform one or more of the operations and methods the same as or similar to those of the point cloud encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquirer 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 120002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud encoder (for example, the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. The detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. The detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 400012.

The transmission processor 12012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream $Geom0^0$ and one or more attribute bitstreams $Attr0^0$ and $Attr1^0$.

A slice refers to a series of syntax elements representing the entirety or part of a coded point cloud frame.

The TPS according to the embodiments may include information about each tile (for example, coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

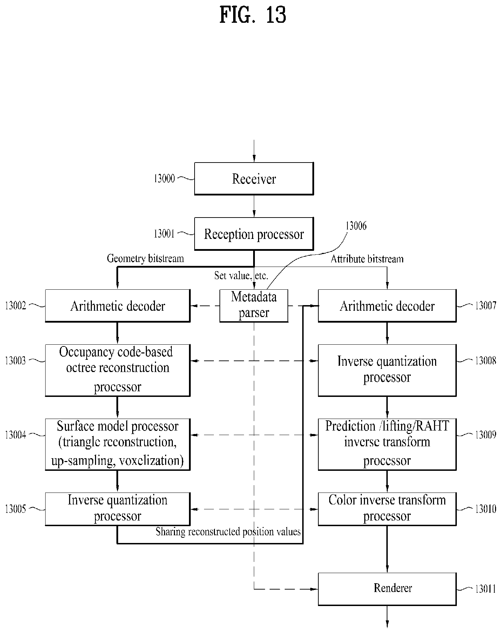

FIG. 13 illustrates a reception device according to embodiments.

The reception device illustrated in FIG. 13 is an example of the reception device 10004 of FIG. 1 (or the point cloud decoder of FIGS. 10 and 11). The reception device illustrated in FIG. 13 may perform one or more of the operations and methods the same as or similar to those of the point cloud decoder described with reference to FIGS. 1 to 11.

The reception device according to the embodiment may include a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction /lifting/RAHT inverse transform processor 13009, a color inverse transform processor 13010, and/or a renderer 13011. Each element for decoding according to the embodiments may perform a reverse process of the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. A detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 1305 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 13004 according to the embodiments may perform trisoup geometry decoding and related geometry reconstruction (for example, triangle reconstruction, up-sampling, voxelization) based on the surface model method. The surface model processor 13004 performs an operation the same as or similar to that of the surface approximation synthesizer 11002 and/or the geometry reconstructor 11003.

The inverse quantization processor 13005 according to the embodiments may inversely quantize the decoded geometry.

The metadata parser 13006 according to the embodiments may parse metadata contained in the received point cloud data, for example, a set value. The metadata parser 13006 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transform processor 13009 according to the embodiments may process the reconstructed geometry and the inversely quantized attributes. The prediction/lifting/RAHT inverse transform processor 13009 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

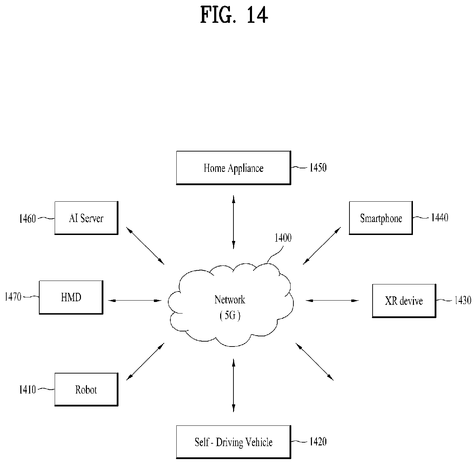

FIG. 14 illustrates an exemplary structure operable in connection with point cloud data transmission/reception methods/devices according to embodiments.

The structure of FIG. 14 represents a configuration in which at least one of a server 1460, a robot 1410, a self-driving vehicle 1420, an XR device 1430, a smartphone 1440, a home appliance 1450, and/or a head-mount display (HMD) 1470 is connected to the cloud network 1400. The robot 1410, the self-driving vehicle 1420, the XR device 1430, the smartphone 1440, or the home appliance 1450 is called a device. Further, the XR device 1430 may correspond to a point cloud data (PCC) device according to embodiments or may be operatively connected to the PCC device.

The cloud network 1400 may represent a network that constitutes part of the cloud computing infrastructure or is present in the cloud computing infrastructure. Here, the cloud network 1400 may be configured using a 3G network, 4G or Long Term Evolution (LTE) network, or a 5G network.

The server 1460 may be connected to at least one of the robot 1410, the self-driving vehicle 1420, the XR device 1430, the smartphone 1440, the home appliance 1450, and/or the HMD 1470 over the cloud network 1400 and may assist in at least a part of the processing of the connected devices 1410 to 1470.

The HMD 1470 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1410 to 1450 to which the above-described technology is applied will be described. The devices 1410 to 1450 illustrated in FIG. 14 may be operatively connected/coupled to a point cloud data transmission/reception device according to the above-described embodiments.

<PCC+XR>

The XR/PCC device 1430 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1430 may analyze 3D point cloud data or image data acquired through various sensors or from an external device and generate position data and attribute data about 3D points. Thereby, the XR/PCC device 1430 may acquire information about the surrounding space or a real object, and render and output an XR object. For example, the XR/PCC device 1430 may match an XR object including auxiliary information about a recognized object with the recognized object and output the matched XR object.

<PCC+XR+Mobile phone>

The XR/PCC device 1430 may be implemented as a mobile phone 1440 by applying PCC technology.

The mobile phone 1440 may decode and display point cloud content based on the PCC technology.

<PCC+Self-driving+XR>

The self-driving vehicle 1420 may be implemented as a mobile robot, a vehicle, an unmanned aerial vehicle, or the like by applying the PCC technology and the XR technology.

The self-driving vehicle 1420 to which the XR/PCC technology is applied may represent a self-driving vehicle provided with means for providing an XR image, or a self-driving vehicle that is a target of control/interaction in the XR image. In particular, the self-driving vehicle 1420 which is a target of control/interaction in the XR image may be distinguished from the XR device 1430 and may be operatively connected thereto.

The self-driving vehicle 1420 having means for providing an XR/PCC image may acquire sensor information from sensors including a camera, and output the generated XR/PCC image based on the acquired sensor information. For example, the self-driving vehicle 1420 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

As described with reference to FIGS. 1 to 14, the point cloud data may include a set of points, and each point may have geometry data (geometry information) and attribute data (attribute information). The geometry data represents three-dimensional (3D) position information (e.g., coordinate values of X, Y, and Z axes) of each point. That is, the position of each point is represented by parameters in a coordinate system representing a 3D space (e.g., parameters (x, y, z) of three axes, i.e., X, Y, and Z axes, representing a space). The attribute information may represent color (RGB, YUV, etc.), reflectance, normal vectors, transparency, etc. of a point. The attribute information may be expressed in a scalar or vector form.

According to embodiments, the point cloud data may be classified into category 1 of static point cloud data, category 2 of dynamic point cloud data, and category 3 acquired while dynamically moving, according to the type and acquisition method of the point cloud data. Category 1 includes a point cloud of a single frame with a high density of points for an object or a space. Data of category 3 may be divided into frame-based data having a plurality of frames acquired while moving and fused data of a single frame in which a point cloud acquired through a Lidar sensor for a large-scale space and a color image acquired through a 2D image are matched.

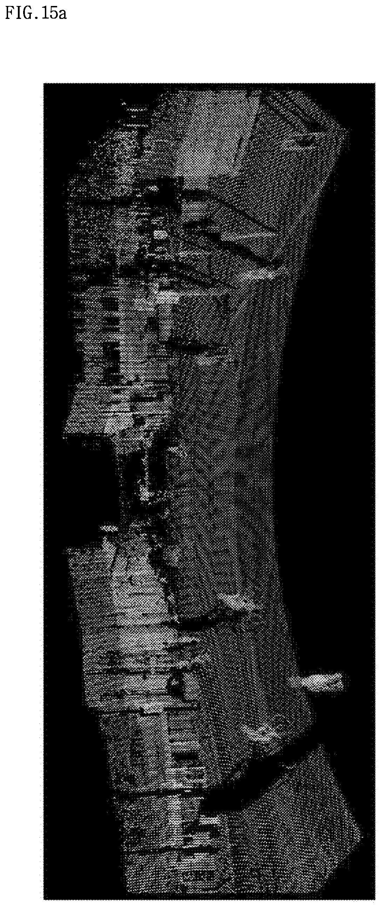

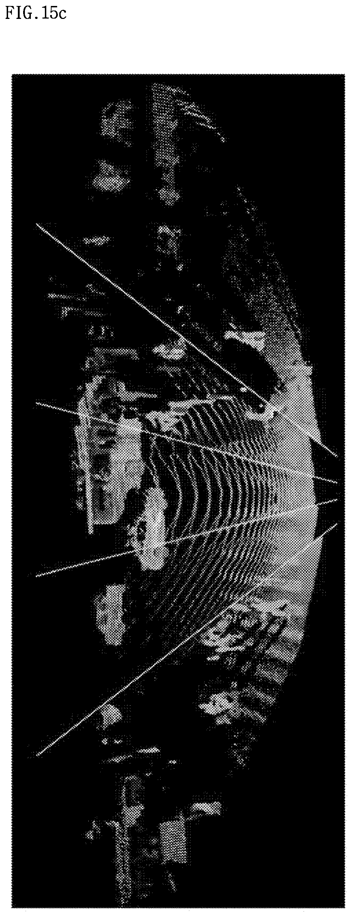

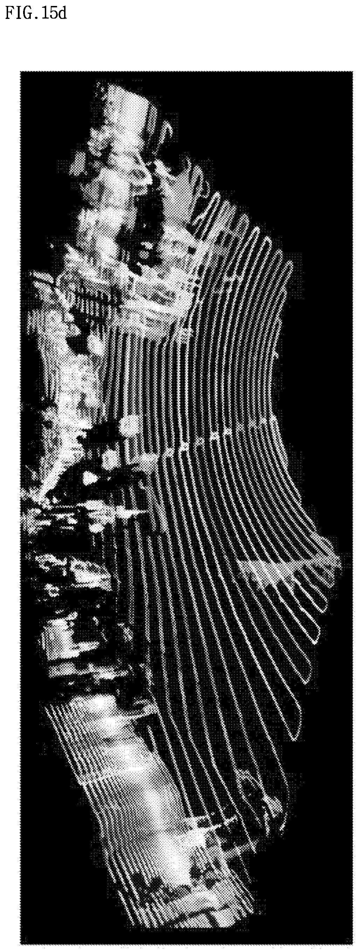

FIGS. 15a to 15d illustrate point cloud data acquired based on a LiDAR sensor according to embodiments.

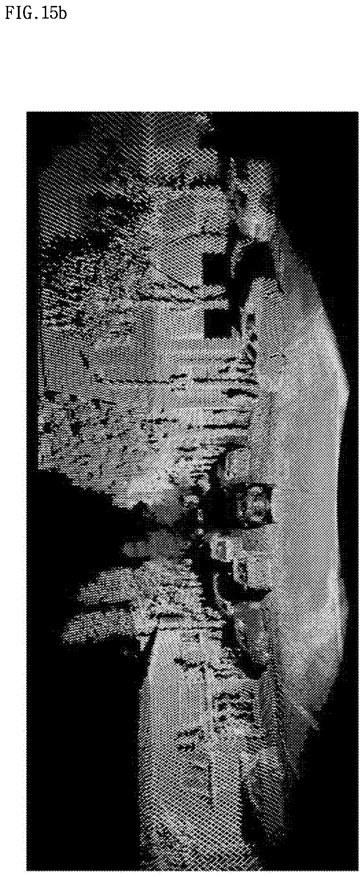

Referring to FIGS. 15a and 15b, when the directionality, range, and scan pattern of the LiDAR sensor are different, the characteristics of acquired data may be different. Therefore, since there are limitations in applying a conventional compression method that assumes omnidirectional scanning, additional information about the LiDAR sensor needs to be transmitted.

The LiDAR (Light Detection and Ranging) sensor may refer to a sensor for light detection and ranging. Embodiments according to this document are described based on the LiDAR sensor, but sensors according to the embodiments may include not only the LiDAR sensor or a RADAR sensor, but also other sensors for detecting external objects.

When data is acquired in a certain pattern, such as a pattern obtained using the LiDAR sensor, if an acquisition pattern changes, the density of data distribution becomes different and, as such, compression efficiency may decrease. Therefore, point cloud data transmission and reception devices/methods according to embodiments propose a method of transmitting characteristics (e.g., scan characteristics) of the LiDAR sensor. Information related to the LiDAR sensor may be used to compress, render, or synthesize point cloud data. Embodiments described in this document may be combined with each other.

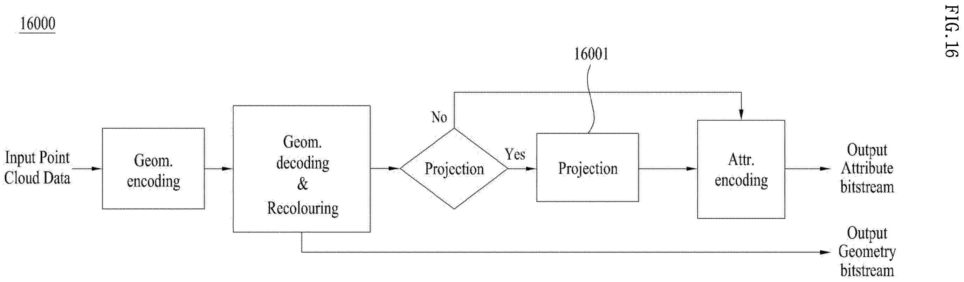

FIG. 16 is a block diagram illustrating a point cloud data transmission device/method according to embodiments. FIG. 16 illustrates the point cloud data transmission method as a flowchart and, simultaneously, illustrates the point cloud data transmission device including components that perform each operation.

In this embodiment, a projection process of point cloud data may be performed as preprocessing for attribute compression of the point cloud data. That is, geometry information of input point cloud data is encoded. In the case of lossy coding, attribute information is matched with changed geometry information through geometry decoding and recoloring. Attribute encoding is then performed. When efficiency of attribute encoding increases through a change in geometry information (e.g., when data with a certain pattern, such as Lidar sensor data, is obtained), point cloud data projection may be performed as preprocessing.

FIG. 16 illustrates a point cloud data transmission method 16000 of the point cloud data transmission device (e.g., the point cloud data transmission device of FIG. 1, 2, 4, 11, or 12). The transmission device according to the embodiments may perform an identical or similar operation to the encoding operation described with reference to FIGS. 1 to 14.

The point cloud data transmission method 16000 according to the embodiments includes encoding geometry information of point cloud data and encoding attribute information of the point cloud data. In addition, the transmission method 16000 includes transmitting a bitstream including the point cloud data. Encoding the attribute information may include determining whether to project the geometry information and projecting the geometry information (16001).

The point cloud data transmission device 16000 according to the embodiments may encode the point cloud data. The point cloud data transmission device according to the embodiments includes a geometry encoder, which encodes geometry representing the positions of one or more points of the point cloud data, and an attribute encoder, which encodes attributes of one or more points. The point cloud data transmission device according to the embodiments may further include a projector 16001 that projects the positions of points for at least any one of the geometry encoder or the attribute encoder. The geometry encoder according to the embodiments may perform an identical or similar operation to the geometry encoding operation described with reference to FIGS. 1 to 14. The attribute encoder according to the embodiments may perform an identical or similar operation to the attribute encoding operation described with reference to FIGS. 1 to 14. The projector 16001 according to the embodiments may perform projection which will be described later.

The projection process according to the embodiments may include a process of converting coordinates representing the positions of points, expressed as first coordinates, into second coordinates and a process of projecting the positions of points based on the coordinates representing the positions of points, converted into and expressed as the second coordinates. The projection operation 16001 in FIG. 16 may include a process of converting the coordinates representing the positions of points, expressed as the first coordinates described above, into the second coordinates. The projection operation 16001 in FIG. 16 may include a process of projecting the positions of points based on the coordinates representing the positions of points, converted into and expressed as the second coordinates. The first coordinates and the second coordinates according to the embodiments may include Cartesian coordinates, spherical coordinates, cylindrical coordinates, or circular-sector-shaped coordinates. The process of projecting the positions of points according to the embodiments may be based on coordinates representing the positions of points, converted into and expressed as the second coordinates, and on a scale value.

The point cloud data transmission device according to the embodiments may transmit a bitstream including the encoded point cloud data. The bitstream according to the embodiments may include signaling information about the projection process.

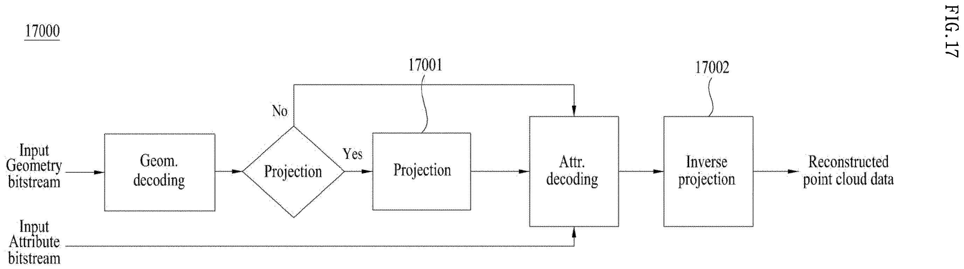

FIG. 17 is a block diagram illustrating a point cloud data reception device/method 17000 according to embodiments. FIG. 17 illustrates the point cloud data reception method as a flowchart and, simultaneously, illustrates the point cloud data reception device including components that perform each operation.

The reception method 17000 includes decoding geometry information and then decoding attribute information. When projection is performed at a transmission side, a result of decoding the attribute information corresponds to information matched to the projected point cloud data. Therefore, as a preprocessing process of attribute decoding, projection may be performed on the decoded geometry information, and the decoded attribute information may be matched to the projected geometry information. Point cloud data obtained by matching geometry and an attribute in a projection space may be converted into data of an original spatial position through an inverse projection process.

FIG. 17 illustrates the point cloud data reception method of the point cloud data reception device (e.g., the point cloud data reception device of FIG. 1, 2, 10, or 13) according to the embodiments. The point cloud data reception device according to the embodiments may perform an operation described with reference to FIGS. 1, 31a, 31b, 32, and 34.

The point cloud data reception method 17000 according to the embodiments includes receiving a bitstream including point cloud data. The bitstream according to the embodiments may include signaling information about an inverse projection process.

The point cloud data reception method 17000 according to the embodiments includes decoding point cloud data. In more detail, the reception method 17000 includes decoding geometry information of the point cloud data and decoding attribute information. In a process of decoding and reconstructing the point cloud data, the reception method 17000 may include an operation 17001 of projecting the geometry information and an operation 17002 of performing inverse projection. In this case, the projection operation 17001 and the inverse projection operation 17002 may be performed based on signaling information transmitted by the transmission device according to the embodiments.

A description will now be given from the viewpoint of a device 17000 corresponding to the reception method 17000. The point cloud data reception device according to the embodiments may decode point cloud data. The point cloud data reception device according to the embodiments may include a geometry decoder, which decodes geometry representing the positions of one or more points of the point cloud data, and an attribute decoder, which decodes attributes of one or more points. The point cloud data reception device according to the embodiments may further include an inverse projector 17002 that inversely projects the positions of points for at least one of the geometry decoder or the attribute decoder.

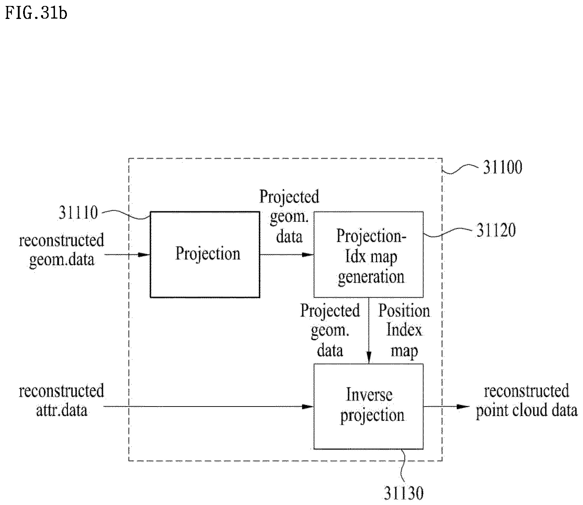

The inverse projection operation according to the embodiments may include a process of inversely projecting the positions of points based on coordinates representing the positions of the points and a process of converting coordinates representing the positions of points, expressed as second coordinates, into first coordinates. The coordinates representing the above-described inversely projected positions of points may be expressed as the first coordinates. A coordinate inverse projector 31130 of FIG. 31b may perform a process of inversely projecting the positions of points based on coordinates representing the positions of the points. The inverse projector 31130 of FIG. 31b may perform a process of converting coordinates representing the positions of points, expressed as the second coordinates, into the first coordinates. The first coordinates and the second coordinates according to the embodiments may include Cartesian coordinates, spherical coordinates, cylindrical coordinates, or circular-sector-shaped coordinates. The first coordinates and the second coordinates may further include circular-sector-shaped spherical coordinates and circular-sector-shaped cylindrical coordinates. The process of inversely projecting the positions of points according to the embodiments may be based on coordinates representing the position of points expressed as the second coordinates and on a scale value.

Hereinafter, a coordinate conversion process of point cloud data and a projection process will be described.

The point cloud data transmission device (e.g., the point cloud video acquirer 10001 in FIG. 1) according to the embodiments may acquire a point cloud video (e.g., the point cloud video in FIG. 1). The transmission device according to the embodiments may acquire the point cloud video using a LiDAR sensor. The transmission device according to embodiments may acquire the point cloud video through an outward-facing method (e.g., the outward-facing method of FIG. 3) using the LiDAR sensor.

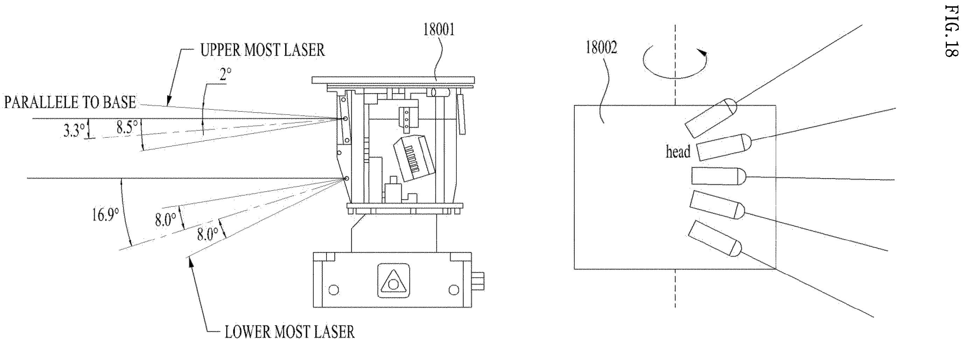

Point cloud data acquired through a LiDAR according to the embodiments may be referred to as LiDAR data. FIGS. 51a to 15d illustrate an example of data acquired through the LiDAR. A LiDAR sensor according to the embodiments is schematically illustrated in FIG. 18. The LiDAR sensor according to the embodiments may acquire LiDAR data based on reflection of light emitted from one or more lasers arranged in a rotating LiDAR head. Accordingly, the LiDAR data according to the embodiments may have a cylindrical or spherical shape. The distance between light rays emitted by one or more lasers increases as the distance from the LiDAR increases. Therefore, the LiDAR data according to the embodiments may have a cylindrical shape in which points are sparsely distributed as the distance from the LiDAR head increases. When an encoding process is performed based on geometry in which points are unevenly distributed, coding efficiency may decrease. For example, when the transmission device according to the embodiments performs the encoding process based on geometry in which distribution of points is uneven, points distributed at a close distance from a specific point may not be detected.

Therefore, the transmission device according to the embodiments may project points of point cloud data (e.g., LiDAR data) (convert the positions of points) to make distribution of points of the point cloud data uniform.

Coordinate conversion represents a process of converting coordinates representing the positions of points, expressed as first coordinates (e.g., Cartesian coordinates), into second coordinates (e.g., spherical coordinates or cylindrical coordinates). The positions of points of point cloud data (e.g., LiDAR data) acquired by the transmission device according to the embodiments may be expressed as the Cartesian coordinates. Therefore, the positions of the points of the point cloud data obtained by the transmission device according to the embodiments may be expressed as parameters representing the Cartesian coordinates (e.g., respective coordinates of the x-axis, y-axis, and z-axis). The transmission device according to the embodiments may convert the coordinates representing the positions of points, expressed as the Cartesian coordinates, into the cylindrical coordinates or the spherical coordinates.

The transmission device according to the embodiments may convert coordinates representing the positions of points, expressed as the Cartesian coordinates, into the cylindrical coordinates. That is, the transmission device according to the embodiments may convert coordinates representing the positions of points, expressed as parameters representing the Cartesian coordinates (e.g., respective coordinate values of the x-axis, y-axis, and z-axis), into parameters representing the cylindrical coordinates (e.g., an r value, a $\theta$ value, and a z value). For example, a process in which the transmission device converts the x-axis, y-axis, and z-axis values of the Cartesian coordinates into the r, $\theta$, and z values of the cylindrical coordinates is as follows.

$$r = \sqrt{x^2 + y^2}$$

$$\theta = \tan^{-1}\left(\frac{y}{x}\right)$$

$$z = z$$

The transmission device according to the embodiments may convert the coordinates representing the positions of points, expressed as the Cartesian coordinates, into the spherical coordinates. That is, the transmission device according to the embodiments may convert coordinates representing the positions of points, expressed as parameters representing the Cartesian coordinate system (e.g., respective coordinate values of the x-axis, y-axis, and z-axis), into parameters representing the spherical coordinate system (e.g., a $\rho$ value, a $\Phi$ value, and a $\theta$ value). For example, a process in which the transmission device converts the values of the x-axis, the y-axis, and the z-axis of the Cartesian coordinates into the ρ, Φ, and θ values of the cylindrical coordinates is as follows.

$$\rho = \sqrt{x^2 + y^2 + z^2}$$

$$\theta = \tan^{-1}\left(\frac{y}{x}\right)$$

$$\Phi = \cos^{-1}\left(\frac{y}{\sqrt{x^2+y^2+z^2}}\right)$$

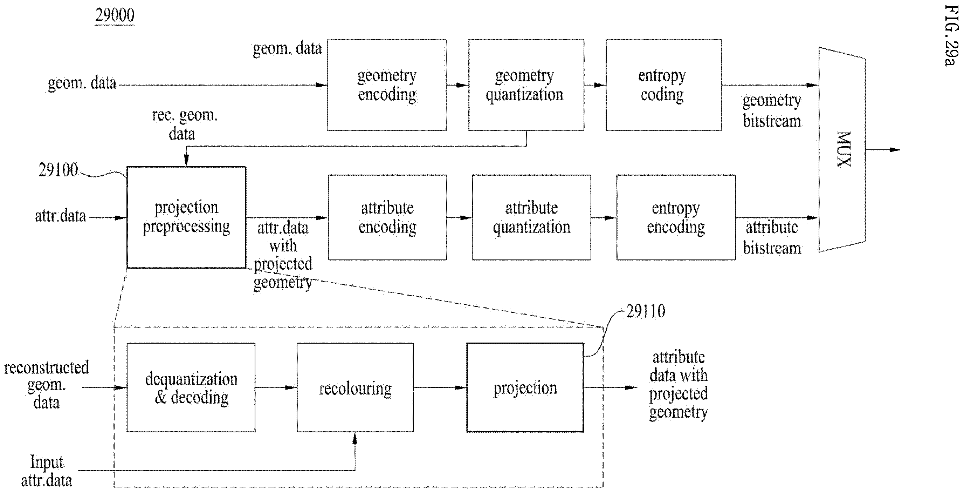

The projection operation (16001 in FIG. 16) according to the embodiments may include a process of converting and expressing coordinates and a process of projecting the positions of points based on converted and expressed coordinates representing the positions of points. The projection operation according to the embodiments may be performed by a projector 29110 of the transmission device (FIG. 29a) according to the embodiments.

The circular-sector-shaped coordinates according to the embodiments may be an additional option for coordinate conversion in addition to the cylindrical coordinates and the spherical coordinates. The circular-sector-shaped coordinates consider the characteristics of lasers arranged vertically in a LiDAR sensor, which acquire data while rotating horizontally. The lasers are arranged vertically at a certain angle on a LiDAR head and rotate horizontally about a vertical axis to acquire data. In order to widen a data acquisition range, the arranged lasers are often arranged to spread radially. A circular-sector-shaped coordinate system considering this case serves to perform conversion around a point on the central axis of a cylinder or sphere. The shape of the circular-sector-shaped coordinate system is formed by a portion overlapping a cylindrical or spherical shape while a circular-sector-shaped plane, which is vertically erected by placing the origin of a circular sector on the vertical axis, rotates horizontally about the vertical axis. In a circular-sector-shaped cylindrical coordinate system and a circular-sector-shaped spherical coordinate system, an elevation direction may be limited to a certain range.

An example of a conversion process of circular-sector-shaped coordinates of point cloud data according to embodiments may be a process of converting coordinates representing the positions of points, expressed as the first coordinates (e.g., Cartesian coordinates), into the second coordinates (e.g., circular-sector-shaped spherical coordinates or circular-sector-shaped cylindrical coordinates). The positions of points of point cloud data (e.g., LiDAR data) acquired by the transmission device according to the embodiments may be expressed as Cartesian coordinates. Therefore, the positions of points of the point cloud data obtained by the transmission device according to the embodiments may be expressed as parameters representing the Cartesian coordinates (e.g., respective coordinate values of the x-axis, y-axis, and z-axis). The transmission device according to the embodiments may convert coordinates representing the positions of points, expressed as the Cartesian coordinates, into coordinates of the circular-sector-shaped cylindrical coordinates or the circular-sector-shaped spherical coordinates.

The transmission device according to the embodiments may convert coordinates representing the positions of points, expressed as Cartesian coordinates, into the circular-sector-shaped cylindrical coordinates. That is, the transmission device according to the embodiments may convert coordinates representing the positions of points expressed as parameters representing the Cartesian coordinates (e.g., respective coordinate values of the x-axis, y-axis, and z-axis) into parameters representing the circular-sector-shaped cylindrical coordinates (e.g., an r value, a θ value, and a z value). For example, a process in which the transmission device converts the x-axis, y-axis, and z-axis values of the Cartesian coordinates into the r, θ, and Φ values of the circular-sector-shaped cylindrical coordinates is as follows.

$$r = \sqrt{x^2 + y^2}$$

$$\theta = \tan^{-1}\left(\frac{y}{x}\right)$$

$$\Phi = \tan^{-1}\left(\frac{z}{\sqrt{x^2+y^2}}\right)$$

The transmission device according to the embodiments may convert coordinates representing the positions of points expressed as the Cartesian coordinates into the circular-sector-shaped spherical coordinates. That is, the transmission device according to the embodiments may convert coordinates representing the positions of points, expressed as parameters representing the Cartesian coordinate system (e.g., respective coordinate values of the x-axis, y-axis, and z-axis), into parameters representing the circular-sector-shaped spherical coordinates (e.g., a $\rho$ value, a $\theta$ value, and a $\Phi$ value). For example, a process in which the transmission device converts the x-axis, y-axis, and z-axis values of the Cartesian coordinates into the $\rho$, $\theta$, and $\Phi$ values of the cylindrical coordinates is as follows.

$$\rho = \sqrt{x^2 + y^2 + z^2}$$

$$\theta = \tan^{-1}\left(\frac{y}{x}\right)$$

$$\Phi = \sin^{-1}\left(\frac{z}{\sqrt{x^2+y^2+z^2}}\right)$$

The projection operation (16001 in FIG. 16) according to the embodiments may include a process of converting coordinates and a process of projecting the positions of points based on converted coordinates representing the positions of points. The projection operation according to the embodiments may be performed by the projector 29110 of the transmission device (FIG. 291) according to the embodiments.

Conversion of coordinates may include a coordinate selection operation and a coordinate conversion application operation. The coordinate system selection operation derives coordinate conversion information. The coordinate conversion information may include information as to whether coordinates are converted or information about coordinates. The coordinate conversion information may be signaled in units of sequences, frames, tiles, slices, or blocks. In addition, the coordinate conversion information may be derived based on whether coordinates of a neighboring block are converted or based on the size of a block, the number of points, a quantization value, a block split depth, a location of a unit, or a distance between a unit and an origin.

The coordinate conversion application operation is an operation of converting coordinates based on coordinates selected in the coordinate selection operation. Coordinate conversion may be Cartesian-to-cylindrical coordinate conversion, Cartesian-to-spherical coordinate conversion, cylindrical-to-Cartesian coordinate conversion, or spherical-to-Cartesian coordinate conversion. The coordinate conversion application operation may perform coordinate conversion based on the coordinate conversion information. Alternatively, coordinate conversion may not be performed based on the information as to whether coordinates are converted.

Hereinafter, an example of coordinate projection of point cloud data according to embodiments will be described. An example of point cloud data projection of the point cloud data transmission device (e.g., the point cloud video encoder 10002 in FIG. 1) according to the embodiments is illustrated.

In order to compress point cloud data expressed as converted coordinates, projection in a compressible form is required. For example, coordinates expressed as a circular-sector-shaped cylinder or a circular-sector-shaped sphere may be converted into a rectangular prism space according to embodiments. Coordinates (r, $\theta$, $\Phi$) or ($\rho$, $\theta$, $\Phi$) expressed as the circular-sector-shaped cylinder or the circular-sector-shaped sphere are converted into (X', Y', Z'). In the figure, x_max, y_max, z_max and x_min, y_min, z_min represent the maximum and minimum values of respective axes. (r, $\theta$, $\Phi$) or ($\rho$, $\theta$, $\Phi$) may correspond one-to-one with respective axes of X', Y', and Z', or separate conversion may be applied thereto. In the case of the circular-sector-shaped cylinder coordinates, the range of $\Phi$ is limited. Compression efficiency may be increased by collecting values mapped to the Z' axis using tangent.

If coordinates representing the positions of points expressed as the Cartesian coordinates according to the embodiments are converted into circular-sector-shaped cylindrical coordinates or circular-sector-shaped spherical coordinates, the transmission device according to the embodiments (e.g., the projector 29110)) may project points (convert positions) based on the converted coordinates. For example, the transmission device may convert the positions of points by mapping each axis of the Cartesian coordinates to each of the r value, $\theta$ value, and $\phi$ value of the coordinates expressed as the circular-sector-shaped cylindrical coordinates. The transmission device according to the embodiments may express coordinates representing the positions of projected points as new coordinates. For example, the transmission device may express coordinates representing the positions of projected points as parameters representing new Cartesian coordinates (e.g., coordinate values of the X' axis, Y' axis, and Z' axis). The new Cartesian coordinates according to the embodiments may be referred to as third coordinates. The new Cartesian coordinates according to the embodiments may include an origin (0,0,0), a pole (r_max (e.g., the maximum value of r), 360° (e.g., a value corresponding to 2$\pi$ [rad]), z_max (e.g., the maximum value of z)), the X' axis, the Y' axis, and the Z' axis. The X' axis, Y' axis, and Z' axis of the new Cartesian coordinates according to the embodiments may be orthogonal to each other at the origin (0,0,0). A process of projecting points (converting positions) in the transmission device according to the embodiments is as follows.

1) Circular-sector-shaped cylindrical coordinate projection 1

$$f_x(r) = r = \sqrt{(x - x_c)^2 + (y - y_c)^2},$$

$$f_y(\theta) = \theta = tan^{-1}\left(\frac{y - y_c}{x - x_c}\right),$$

$$f_z(\phi) = \phi = tan^{-1}\left(\frac{z - z_c}{\sqrt{(x - x_c)^2 + (y - y_c)^2}}\right)$$

2) Circular-sector-shaped cylindrical coordinate projection 2

This method considers convenience of calculation by minimizing calculation of a trigonometric function.

$$f_x(r) = r^2 = (x - x_c)^2 + (y - y_c)^2,$$

$$f_y(\theta) = \cos^2\frac{\theta}{2} = \frac{1 + \cos\theta}{2} = \left[1 + \frac{x - x_c}{\sqrt{(x - x_c)^2 + (y - y_c)^2}}\right]/2 = \frac{r + x - x_c}{2r},$$

$$f_z(\phi) = \tan\phi = \frac{z - z_c}{\sqrt{(x - x_c)^2 + (y - y_c)^2}} = \frac{z - z_c}{r}$$

Similar projection may be performed even on the circular-sector-shaped spherical coordinates as follows.

1) Circular-sector-shaped spherical coordinate projection 1

$$f_x(\rho) = \rho = \sqrt{(x - x_c)^2 + (y - y_c)^2 + (z - z_c)^2},$$

$$f_y(\theta) = \theta = tan^{-1}\left(\frac{y - y_c}{x - x_c}\right),$$

$$f_z(\phi) = \phi = sin^{-1}\left(\frac{z - z_c}{\sqrt{(x - x_c)^2 + (y - y_c)^2 + (z - z_c)^2}}\right)$$

2) Circular-sector-shaped spherical coordinate projection 2

$$f_x(\rho) = \rho^2 = (x - x_c)^2 + (y - y_c)^2 + (z - z_c)^2,$$

$$f_y(\theta) = \cos^2\frac{\theta}{2} = \frac{1+\cos\theta}{2} = \left[1 + \frac{x-x_c}{\sqrt{(x-x_c)^2+(y-y_c)^2}}\right]/2 = \frac{r+x-x_c}{2r},$$

$$f_z(\phi) = \sin\phi = \frac{z-z_c}{\sqrt{(x-x_c)^2+(y-y_c)^2+(z-z_c)^2}} = \frac{z-z_c}{\rho}$$

In the above equations, $(x_c, y_c, z_c)$ may represent a center position in coordinates before conversion and mean a head position of a LiDAR (e.g., XYZ coordinates in the global coordinate system).

Hereinafter, projection correction considering the laser position of a LiDAR sensor will be described.

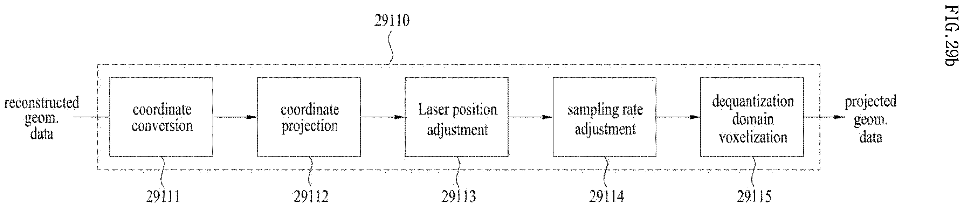

The projection correction considering the laser position may be performed by the transmission device 10000 in FIG. 1, the transmission device of FIG. 4, the transmission device of FIG. 12, the XR device 1430 in FIG. 14, the transmission device 16000 of FIG. 16, the transmission device 29000 of FIG. 29, and/or hardware, which includes one or more processors or integrated circuits configured to communicate with one or more memories, software, firmware, or a combination of hardware, software, and firmware. More specifically, the projection correction may be performed by the projector 29110 of the transmission device 29000 according to the embodiments.

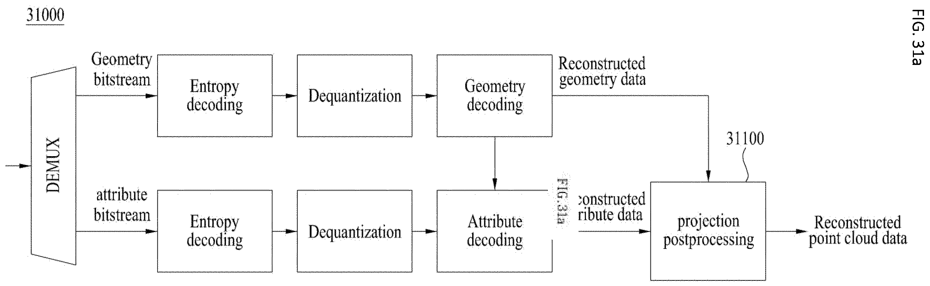

In addition, the projection correction considering the laser position may be performed by the reception device 10004 in FIG. 1, the reception device of FIG. 11, the reception device of FIG. 13, the XR device 1430 in FIG. 14, the reception device 17000 of FIG. 17, a reception device 31000 of FIG. 31, and/or hardware, which includes one or more processors or integrated circuits configured to communicate with one or more memories, software, firmware, or a combination of hardware, software, and firmware. More specifically, the projection correction may be performed by a reprojector 31110 of the reception device 31000 according to the embodiments.

FIG. 18 schematically illustrates a LiDAR structure for acquiring point cloud data according to embodiments. The structure of a LiDAR sensor has a plurality of lasers arranged in a vertical direction on a LiDAR head. In addition, as illustrated in the left side of FIG. 18, lasers may be disposed at an upper part and a lower part of the LiDAR head, respectively, in order to acquire more point cloud data. In this case, a difference in position between the lasers occurs, which may cause a decrease in projection accuracy. Therefore, a method of correcting projection considering the position of the laser may be used.

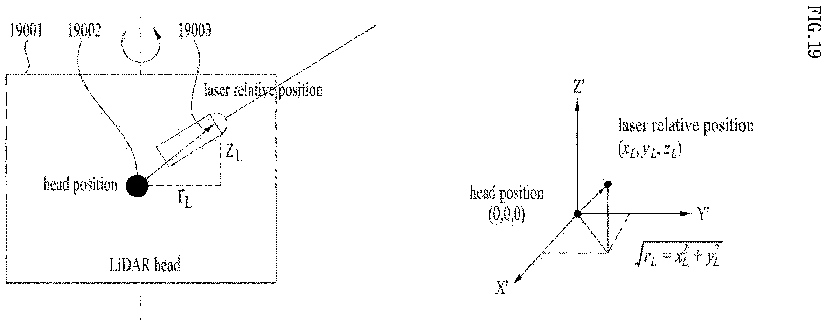

FIG. 19 illustrates the position of a LiDAR head and the position of a laser according to embodiments. In FIG. 19, the position of a vertically arranged laser is distant from a head position $(x_c, y_c, z_c)$ 19002 by $r_L$ in a horizontal direction and by $z_L$ in a vertical direction. Assuming that a head position is (0, 0, 0), the laser is located at $(x_L, y_L, z_L)$ on the XYZ coordinate system, and $(x_L, y_L)$ may be obtained from relational equations with $r_L$ as follows.

$x_L = r_L \cdot \cos\theta. \ y_L = r_L \cdot \sin\theta$

If the structure of the LiDAR sensor is known, $(x_L, y_L, z_L)$ may be directly signaled or may be obtained.

As described above, when the relative position of the laser is considered, the effect of starting the position of each laser at the head position is obtained through the following equations below.

1) Conversion into the circular-sector-shaped cylindrical coordinates considering the position of the laser

$$r_L = \sqrt{(x-x_c-x_L)^2 + (y-y_c-y_L)^2} = \sqrt{(x-x_c)^2 + (y-y_c)^2} - r_L,$$

$$\theta_L = tan^{-1}\left(\frac{y-y_c-y_L}{x-x_c-x_L}\right)$$

$$\phi_L = tan^{-1}\left(\frac{z-z_c-z_L}{\sqrt{(x-x_c-x_L)^2 + (y-y_c-y_L)^2}}\right)$$

2) Conversion into the circular-sector-shaped spherical coordinates considering the position of the laser

$$\rho_L = \sqrt{(x - x_c - x_L)^2 + (y - y_c - y_L)^2 + (z - z_c - z_L)^2},$$

$$\theta_L = tan^{-1}\left(\frac{y - y_c - y_L}{x - x_c - x_L}\right)$$

$$\phi_L = \sin^{-1}\left(\frac{z - z_c - z_L}{\sqrt{(x - x_c - x_L)^2 + (y - y_c - y_L)^2 + (z - z_c - z_L)^2}}\right)$$

Hereinafter, projection correction considering sampling characteristics of the LiDAR sensor will be described.

The projection correction considering sampling characteristics may be performed by the transmission device 10000 in FIG. 1, the transmission device of FIG. 4, the transmission device of FIG. 12, the XR device 1430 in FIG. 14, the transmission device 16000 of FIG. 16, the transmission device 29000 of FIG. 29, and/or hardware, which includes one or more processors or integrated circuits configured to communicate with one or more memories, software, firmware, or a combination of hardware, software, and firmware. More specifically, the projection correction may be performed by the projector 29110 of the transmission device 29000 according to the embodiments.

In addition, the projection correction considering sampling characteristics may be performed by the reception device 10004 in FIG. 1, the reception device of FIG. 11, the reception device of FIG. 13, the XR device 1430 in FIG. 14, the reception device 17000 of FIG. 17, the reception device 31000 of FIG. 31, and/or hardware, which includes one or more processors or integrated circuits configured to communicate with one or more memories, software, firmware, or a combination of hardware, software, and firmware. More specifically, the projection correction may be performed by the re-projector 31110 of the reception device 31000 according to the embodiments.

Additional correction may be required to use projected point cloud data for point cloud compression. The point cloud compression assumes that X, Y, and Z data are all positive integers when Morton code sorting is used. Accordingly, all the projected point cloud data needs to be converted to have positive integer values, and for this, a voxelization process may be performed. In this case, if all points are distinguishable, ideal lossless compression may be performed, but if the distance between points is small, loss may occur in the voxelization process, so that correction is required to improve compression performance. In this case, a range of a point cloud projection value and characteristics of a data acquirer may be considered. Since r or ρ represents the distance from the center, r or ρ has a value greater than or equal to 0, and the frequency of use of data may be determined according to resolution based on the distance from the laser and to an interpretation capability of the acquirer. θ represents an azimuthal angle when a LiDAR rotates around a vertical axis and may range from 0 to 360 degrees in a typical LiDAR sensor. The frequency of use of data is determined by the amount of data acquired per degree while the LiDAR sensor rotates. φ represents an elevation angle in a vertical axis direction. Since φ is highly correlated with an angle of a single laser, φ may have a range of -π/2 to π/2, and the frequency of use of data depends on the number of lasers, the vertical positions of the lasers, and the accuracy of the lasers. Next, a method for correcting projection based on the above characteristics will be proposed. In this case, correction for each axis may be defined as a scaling factor. Hereinafter, scaling for r, θ, and φ will be described, and an application method therefor may be equally applied to ρ, θ, and φ or other projection methods.

$$f_s(r_L) = s_r \cdot f(r_L), \quad f_s(\theta_s) = s_\theta \cdot f(\theta_L), \quad f_s(\phi_s) = s_\phi \cdot f(\phi_L)$$

As an embodiment, scaling factors may be defined based on mechanical characteristics of a point cloud data acquirer. For example, when a device in which N lasers are arranged vertically rotates in a horizontal direction, the scaling factors may be defined as follows in the case in which laser reflection light is detected M times per degree and the radius of a spot generated by each laser light source is given as D. Here, $k_r$, $k_\theta$ and $k_\phi$ denote constants.

$$s_r = k_r, \quad s_\theta = k_\theta M, \quad s_\phi = k_\phi D$$

As an embodiment, when a minimum distance between data obtained per laser light source is known by a vertical direction, a horizontal direction, and a diameter direction, scaling factors may be defined as follows. In this case, $d_r$, $d_\theta$ and $d_\phi$ denote distances in a direction in which a radius increases, a rotational horizontal direction, and a vertical direction, respectively, and min() may denote a minimum value within point cloud data or a minimum value according to physical characteristics.

$$s_r = k_r/\min(d_r), \quad s_\theta = k_\theta/\min(d_\theta), \quad s_\phi = k_\phi/\min(d_\phi)$$

As an embodiment, scaling factors may be defined as a function of density of each axis. That is, a large scaling factor may be assigned to an axis having a high density per unit length, and a relatively small scaling factor may be assigned to an axis having a low density per unit length. For example, when the maximum number of points in a direction parallel to each axis is N and the length of each axis is D, scaling factors may be defined as follows.

$$s_r = k_r N_r/D_r, \quad s_\theta = k_\theta N_\theta/D_\theta, \quad s_\phi = k_\phi N_\phi/D_\phi$$

As an embodiment, different scaling factors may be defined according to importance. For example, information may be considered more important when the information is closer to the origin. In this way, different weights may be applied according to the distance from the origin (or center). In addition, a high weight may be applied to forward information with respect to an azimuthal angle or an elevation angle or information close to the horizon. In this case, the weight may be given in a stepped fashion or the reciprocal of an exponential according to the range of an important part.

$$s_r = k_r/g(r), \quad s_\theta = k_\theta/g(\theta), \quad s_\phi = k_\phi/g(\phi)$$

As an embodiment, each axis may be shifted to start from the origin so that the projected point cloud data has a positive number. Attribute coding may use Morton code ordering (prediction-lifting) or use octree-based geometry information (RAHT). In order to evenly widen distribution in the range of available positions, the length of each axis may be powers of 2. In addition, the lengths of the three axes may be set to be the same in order to increase compression efficiency. Correction reflecting such considerations may be expressed as follows.

$$f_s(r_L) = \frac{2^{nr}-1}{max_r}[s_r \cdot f(r_L) - min_r], \quad f_s(\theta_s) = \frac{2^{n\theta}-1}{max_\theta}[s_\theta \cdot f(\theta_L) -$$

$$min_\theta], \quad f_s(\phi_s) = \frac{2^{n\phi}-1}{max_\phi}[s_\phi \cdot f(\phi_L) - min_\phi]$$

$$\text{if sampling\_adjustment\_cubic\_flag} = 1,$$

$$f'_s(r_L) = \frac{max}{max_r}f_s(r_L), \quad f'_s(\theta_L) = \frac{max}{max_\theta}f_s(\theta_L), \quad f'_s(\phi_L) = \frac{max}{max_\phi}f_s(\phi_L),$$

In this case, max may mean max $(max_r, max_\theta, max_\phi)$. Alternatively, max may be the nearest 2^n -1 of numbers greater than $max(max_r, max_\theta, max_\phi)$.

As described above, the point cloud data transmission device according to the embodiments may change the positions of points in consideration of characteristics of acquired point cloud data (e.g., distribution characteristics of points). In addition, the transmission device according to the embodiments may change the positions of points based on a scale value for each axis according to distribution characteristics of the points. If the scale value for each axis according to the embodiments has a value greater than 1, the positions of projected points may be more sparsely distributed than the positions of points before projection. Conversely, if the scale value for each axis according to the embodiments has a value smaller than 1, the positions of the projected points may be more densely distributed than the positions of points before projection. For example, if points of acquired point cloud data are densely distributed in x-axis and y-axis directions and sparsely distributed in a z-axis direction, the transmission device may uniformly project the positions of points based on $\alpha$ and $\beta$ values greater than 1 and a $\gamma$ value less than 1.

The point cloud data transmission device according to the embodiments may perform coding based on the positions (or geometry) of the projected points. Therefore, the point cloud data transmission device according to the embodiments may secure higher coding gain by increasing coding efficiency using the projected geometry (e.g., geometry having uniform distribution)

Hereinafter, voxelization will be described.

The voxelization process may be performed by the transmission device 10000 in FIG. 1, the transmission device of FIG. 4, the transmission device of FIG. 12, the XR device 1430 in FIG. 14, the transmission device 16000 of FIG. 16, the transmission device 29000 of FIG. 29, and/or hardware, which includes one or more processors or integrated circuits configured to communicate with one or more memories, software, firmware, or a combination of hardware, software, and firmware.

In addition, the voxelization process may be performed by the reception device 10004 in FIG. 1, the reception device of FIG. 11, the reception device of FIG. 13, the XR device 1430 in FIG. 14, the reception device 17000 of FIG. 17, the reception device 31000 of FIG. 31, and/or hardware, which includes one or more processors or integrated circuits configured to communicate with one or more memories, software, firmware, or a combination of hardware, software, and firmware.

Point cloud data expressed as X, Y, Z coordinates through the above-described process may be converted into coordinates that are efficient for compression, such as a distance and an angle. The converted data may be converted into location information of an integer unit to apply a point cloud compression technique through the voxelization process.

Hereinafter, inverse projection will be described.

An inverse projection process may be performed by the reception device 10004 in FIG. 1, the reception device of FIG. 11, the reception device of FIG. 13, the XR device 1430 in FIG. 14, the reception device 17000 of FIG. 17, the reception device 31000 of FIG. 31, and/or hardware, which includes one or more processors or integrated circuits configured to communicate with one or more memories, software, firmware, or a combination of hardware, software, and firmware. More specifically, the inverse projection process may be performed by the inverse projector 31130 of the reception device 31000 according to the embodiments.

The inverse projection process may be performed identically to the projection process of point cloud data. Additionally, a conversion process of point cloud data into data in an original xyz domain from data in a projection domain is needed. In inverse projection, conversion of point cloud data into existing coordinates from projected coordinates may be performed using inverse conversion equations. However, lossless reconstruction may be difficult due to location errors generated by voxelization and rounding performed in the conversion process. In other words, even when attribute information is reconstructed without loss, the attribute information may not be matched due to errors of location information and unintended errors may be generated.

When projection is applied to attribute coding, the point cloud data may be restored by connecting restored geometry information and corresponding attribute information, so that the attribute information is matched to an appropriate value. As a method of connecting projected geometry information to geometry information before projection, geometry information may be indexed. That is, the reception device according to the embodiments may assign indexes to the restored geometry information according to order after ordering the restored geometry information in a certain way (e.g., Morton code order or x-y-z zigzag order).

As an example, an index-to-decoded position map and a decoded position-to-index map may be generated based on a relationship between a position before projection and an index. Projection is performed on location information to which the index is assigned. A decoded position-to-projected position map may be generated and a projected position-to-index map may be generated by a relationship between a decoded position and the index. After attribute decoding, projected points have attribute values and may be restored to original positions at projected positions through the projected position-to-index map and an index-to-position map. In this way, the reconstructed geometry information and the reconstructed attribute information may be mutually matched.

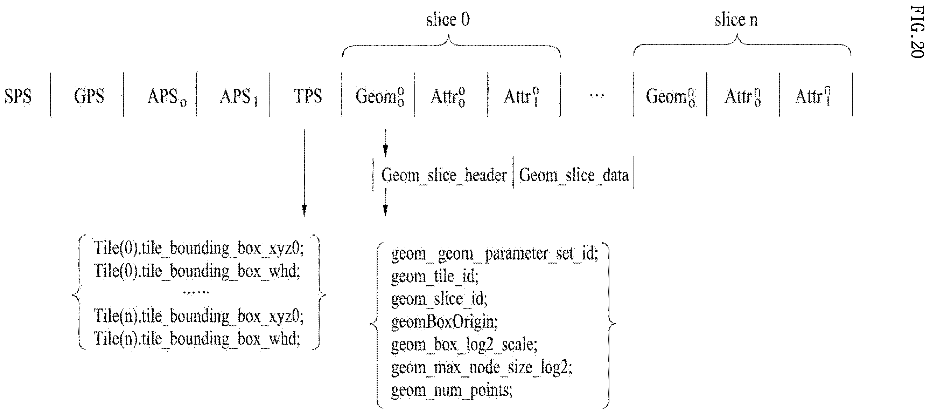

FIG. 20 illustrates an example of encoded point cloud data according to embodiments.

The point cloud video encoder 10002 according to the embodiments may encode point cloud data in the encoding process 20001, and the transmitter 10003 according to the embodiments may transmit a bitstream including the encoded point cloud data to the reception device 10004.

The encoded point cloud data (bitstream) according to the embodiments may be generated by the point cloud video encoder 10002 in FIG. 1, the encoding process 20001 in FIG. 2, the encoder of FIG. 4, the transmission device of FIG. 12, the XR device 1430 in FIG. 14, the transmission device of FIG. 16, the transmission device of FIG. 29, and/or hardware, which includes one or more processors or integrated circuits configured to communicate with one or more memories, software, firmware, or a combination of hardware, software, and firmware.

In addition, the decoded point cloud data (bitstream) according to the embodiments may be decoded by the point cloud video decoder 10006 in FIG. 1, the decoding process 20003 in FIG. 2, the decoder of FIG. 11, the reception device of FIG. 13, the XR device 1430 in FIG. 14, the reception device of FIG. 31, and/or hardware, which includes one or more processors or integrated circuits configured to communicate with one or more memories, software, firmware, or a combination of hardware, software, and firmware.

The meanings of the abbreviations illustrated in FIG. 20 are as follows.

    SPS: Sequence Parameter Set
    GPS: Geometry Parameter Set
    APS: Attribute Parameter Set
    TPS: Tile Parameter Set
    Geom: Geometry bitstream = geometry slice header + geometry slice data
    Attr: Attribute bitstream = attribute slice header + attribute slice data

A geometry slice header according to embodiments may be referred to as geometry data unit header. An attribute slice header according to embodiments may be referred to as an attribute data unit header. Additionally, geometry slice data according to embodiments may be referred to as geometry data unit data. Attribute slice data according to embodiments may be referred to as attribute data unit data. That is, a slice may be referred to as a data unit.

Referring to FIG. 20, information about a LiDAR sensor, coordinate conversion, and projection-related information according to embodiments may be defined in an SPS. The SPS may indicate that projection is performed, and detailed information may be transmitted in projection information (projection_info()) to the reception device according to the embodiments.

In addition, all or part of related information is transmitted in the SPS, and some of the remaining information is transmitted in a GPS, an APS, a TPS, a slice header, or an SEI message to the reception device according to the embodiments. An application range and application method of transmitted information may be differently set by defining a corresponding location or a separate location depending on an application or a system.

In addition, when a defined syntax element is applicable to a plurality of point cloud data streams as well as a point cloud data stream, related information may be transmitted in a parameter set of a higher concept to the reception device.

Parameters (metadata, signaling information, etc.) according to the embodiments may be generated by the transmission device according to the embodiments or a processor in a transmission method and may be transmitted to the reception device according to the embodiments so as to be used in a point cloud data reconstruction process. For example, parameters according to the embodiments may be generated by a metadata processor (or metadata generator) of the transmission device according to the embodiments and may be obtained by a metadata parser of the reception device according to the embodiments.

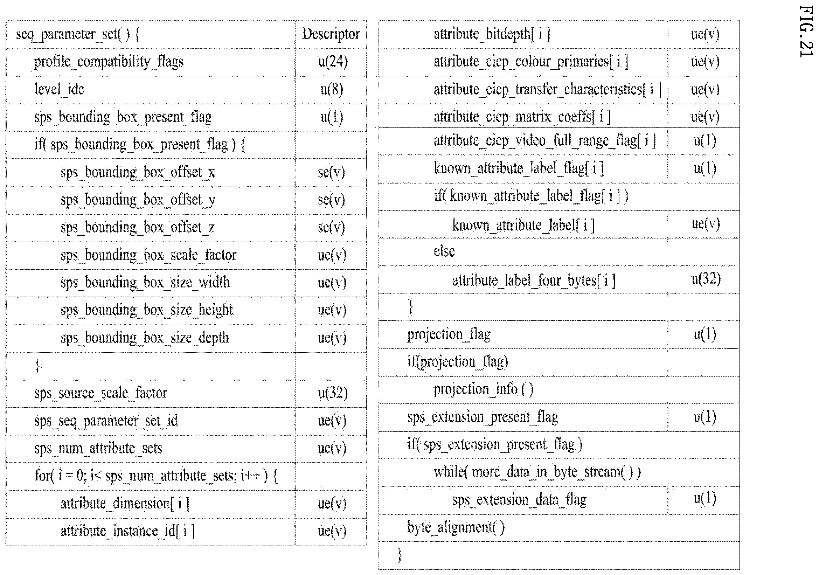

FIG. 21 illustrates an exemplary syntax of an SPS according to embodiments.

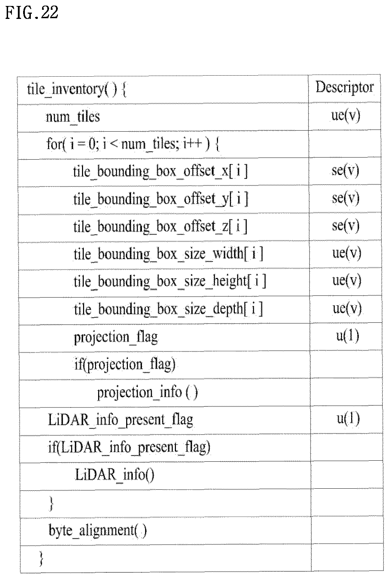

FIG. 22 illustrates an exemplary syntax of a tile inventory according to embodiments.

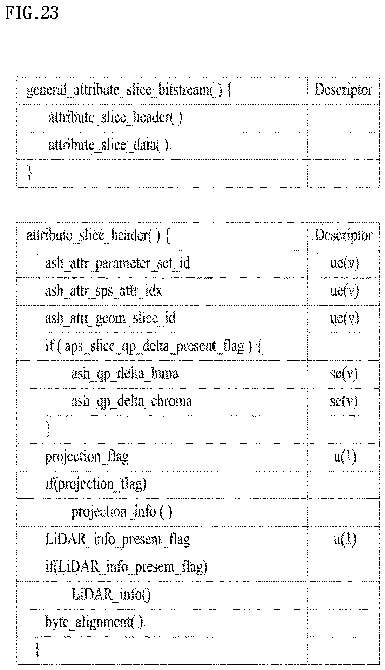

FIG. 23 illustrates an exemplary syntax of a general attribute slice bitstream and an exemplary syntax of an attribute slice header according to embodiments.

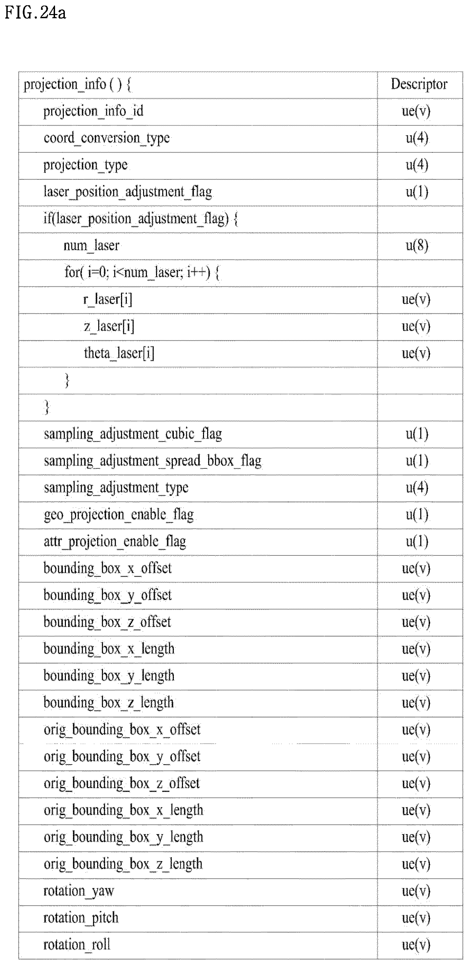

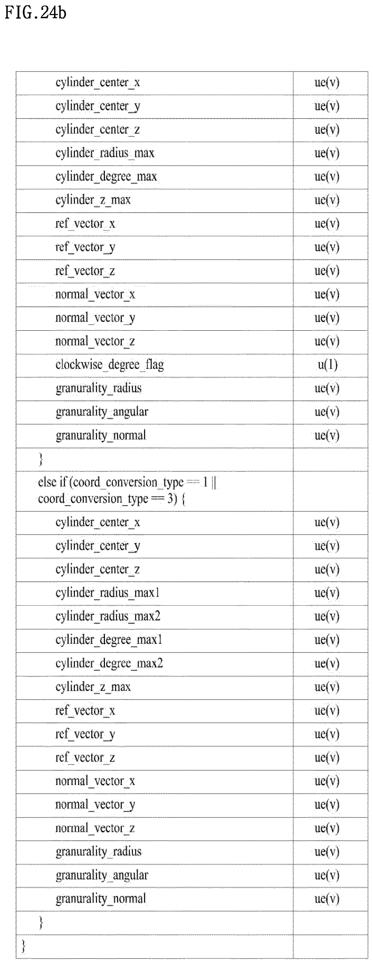

FIGS. 24a and 24b illustrate an exemplary syntax of projection information according to embodiments.

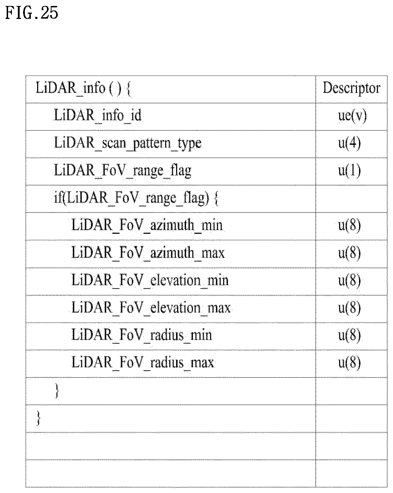

FIG. 25 illustrates an exemplary syntax of LiDAR information according to embodiments.

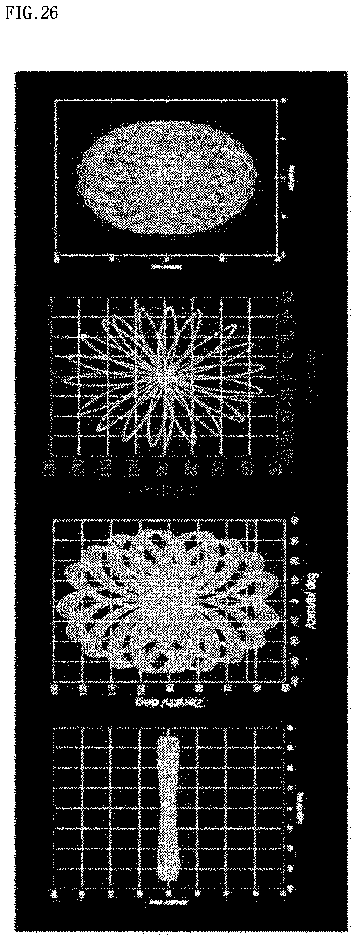

FIG. 26 illustrates an exemplary scan pattern through which a LiDAR acquires point data cloud according to embodiments.

FIG. 21 illustrates an example of LiDAR sensor-related information defined in an SPS. FIGS. 22 and 23 illustrate exemplary syntaxes of LiDAR sensor information defined in a tile inventory and a slice header, respectively. When projection is performed after a tile or a slice is partitioned, the LiDAR sensor information may be used, and projection may be applied to either geometry or attributes. Bounding box information etc. may use information in projection_info, which is transmitted through each information or defined according to the embodiments, or the LiDAR information.

Parameter information represented in FIGS. 21 to 26 may be included in the bitstream illustrated in FIG. 20. The parameter information represented in FIGS. 21 to 26 may be included in an SPS, a GPS, an APS, a TPS, a geometry slice header, geometry slice data, an attribute slice header, or attribute slice data.

For example, parameter information belonging to subfields of LiDAR_info() of FIG. 25 may be included in the SPS, the GPS, the APS, the TPS, the geometry slice header, the geometry slice data, the attribute slice header, or the attribute slice data. In addition, the parameter information belonging to the subfields of LiDAR_info() may be included in other locations additionally defined in the bitstream although not illustrated in FIG. 20.

When projection_flag is 1, this indicates that data decoded in a post-processing process of a decoder needs to be re-projected or inverse-projected onto an XYZ coordinate space. When projection_flag is 1, the projection information may be transmitted so that the reception device may be aware of specific information for re-projection or inverse projection.

projection_info_id is an indicator representing projection information.

coordinate_conversion_type of 0 may represent cylindrical coordinates, coordinate_conversion_type of 1 may represent spherical coordinates, coordinate_conversion_type of 2 may represent circular-sector-shaped cylindrical coordinates from which a triangular pyramid is removed, and coordinate_conversion_type of 3 may represent circular-sector-shaped spherical coordinates in which a circular sector shape is rotated.

projection_type indicates the type of projection used for coordinate_conversion_type. For example, when projection_type used for coordinate_conversion_type of 2 is 0, x, y, z may be defined to be matched to r, θ, ϕ. When projection_type is 1, x, y, z may be defined to be matched to $r^2$, $\cos^2\frac{\theta}{2}$, $\tan\phi$, If necessary, projection_type may be individually defined for each axis.

When laser_position_adjustment_flag is 1, this may represent projection correction considering the position of a laser.

num_laser represents the total number of lasers. r_laser represents a horizontal distance from a central axis of a laser. z_laser represents a vertical distance from a horizontal center of a laser. theta_laser represents an elevation angle of a laser. In this way, position information of a laser may be provided by r_laser, z_laser, and theta_laser or by x_laser, y_laser, and z_laser.

When sampling_adjustment_cubic_flag is 1, the lengths of three axes are adjusted to be equal when performing correction considering sampling characteristics.

When sampling_adjustment_spread_bbox_flag is 1, a method of uniformly widening distribution within a bounding box may be used during sampling adjustment.

sampling_adjustment_type represents a sampling adjustment method. If sampling_adjustment_type is 0, this may define an adjustment method based on mechanical characteristics. If sampling_adjustment_type is 1, this may define an adjustment method based on minimum axial-direction distance between points. If sampling_adjustment_type is 2, this may define an adjustment method based on density of each axis. If sampling_adjustment_type is 3, this may define an adjustment method based on importance of points.

When geo_projection_enable_flag or att_projection_enable_flag is set to 1, this indicates that converted coordinates are used during geometry or attribute coding.

bounding_box_x_offset, bounding box_y offset, and bounding_box_z_offset represent starting points of ranges including coordinate-converted point cloud data. For example, if projection_type is 0, bounding_box_x_offset, bounding box_y offset, and bounding_box_z_offset may have values of (0, 0, 0), and if projection_type is 1, bounding_box_x_offset, bounding box_y offset, and bounding_box_z_offset may have values of (-r_max1, 0, 0).

bounding_box_x_length, bounding box_y length, and bounding_box_z_length may indicate ranges including coordinate-converted point cloud data. When projection_type is 0, r_max, 360, and z_max may be matched to bounding_box_x_length, bounding box_y length, and bounding_box_z_length, and when projection_type is 1, r_max1+ r_max2, 180, and z_max may be matched to bounding_box_x_length, bounding box_y length, and bounding_box_z_length.

orig_bounding_box_x_offset, orig bounding box_y offset, and orig_bounding_box_z_offset may represent starting points of ranges including point cloud data before coordinate conversion.

orig_bounding_box_x_length, orig bounding box_y length, and orig_bounding_box_z_length may represent ranges including point cloud data before coordinate conversion.

rotation_yaw, rotation_pitch, and rotation_roll represent rotation information used in coordinate conversion.

cylinder_center_x, cylinder center_y, and cylinder_center_z indicate the positions of a center of a cylindrical column in original XYZ coordinates.

cylinder_radius_max, cylinder_degree_max, and cylinder_z_max represent maximum values of the radius, degree, and height of a cylindrical column in the original XYZ coordinates.

ref_vector_x, ref_vector_y, and ref_vector_z represent directionalities of a vector, which is a reference when projecting a cylindrical column, in (x, y, z) directions from the center.

normal_vector_x, normal_vector_y, and normal_vector_z represent directionalities of a normal vector of the cylindrical column in the (x, y, z) directions from the center.

clockwise_degree_flag represents the directionality for obtaining a cylindrical angle. If clockwise_degree_flag is 1, this indicates a clockwise direction from a top view, and if clockwise_degree_flag is 0, this indicates a counterclockwise direction from a top view. clockwise_degree_flag may correspond to directionality of a y-axis of a converted bounding box (in this embodiment, clockwise_degree_flag is 0).

granurality_angular, granurality_radius, and granurality_normal are parameters representing an angle, a distance from a center in a circular plane, and resolution for a distance from a center in the direction of a normal vector, respectively. granurality_angular, granurality_radius, and granurality_normal may correspond to the scaling factors $\alpha$, $\beta$, and $\gamma$ used during cylindrical coordinate conversion.

LiDAR_info_id represents the type of data that transmits LiDAR information.

LiDAR_scan_pattern_type represents a scan pattern through which a LiDAR acquires point cloud data. For example, if the scan pattern of a LiDAR sensor changes as illustrated in FIG. 26, the corresponding scan pattern may be transmitted. When necessary, parameters indicating the height, width, depth, angle, etc. of each scan pattern may be additionally transmitted.

Referring to FIG. 26, various scan patterns of a LiDAR sensor are illustrated on a graph in which the horizontal axis represents an azimuthal angle (azimuth/degree) and the vertical axis represents a zenith angle (zenith/degree). Since the distribution and density of point cloud data obtained may vary depending on a pattern scanned by the LIDAR sensor, the point cloud data transmission and reception devices/methods according to the embodiments may transmit and receive information about a scan pattern type. The LiDAR sensor may have at least one scan pattern type.

If LiDAR_FoV_range_flag is 1, this may indicate that information related to a field of view (FoV) range of the LiDAR sensor is transmitted. If LiDAR_FoV_range_flag is 0, this may indicate that an FoV includes all directions. In other words, LiDAR_FoV_range_flag may indicate whether information indicating a scanning range of the LiDAR sensor is transmitted.

LiDAR_FoV_azimuth_min, LiDAR_FoV_azimuth_max, LiDAR_FoV_elevation_min, LiDAR_FoV_elevation_max, LiDAR_FoV_radius_min, and LiDAR_FoV_radius_max may represent a scan range or FoV range of the LiDAR. FIG. 25 illustrates the ranges of the azimuth, elevation, and radius axes in relation to the FoV range of the LiDAR. However, information about the scan range (or FoV range) according to coordinates to which the range of x, y, and z values of Cartesian coordinates are applied may be transmitted. That is, scan range information according to embodiments may indicate the scan range of the LiDAR sensor by transmitting the range of coordinate values according to a specific coordinate system.

The parameter information illustrated in FIG. 25 may be information acquired from the LiDAR sensor in the data input unit (12000 in FIG. 12) according to the embodiments or information generated by the metadata processor (12007 in FIG. 12) according to the embodiments. The parameter information may also be information input to/stored in the transmission/reception device by a user according to the embodiments.

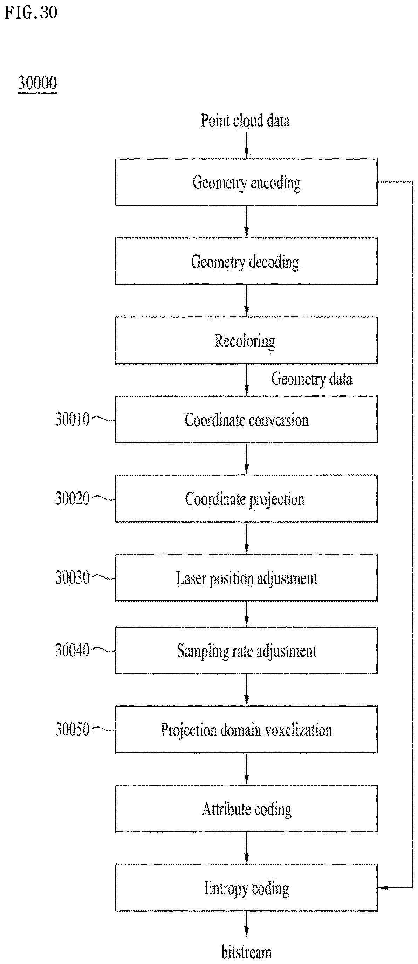

The parameter information illustrated in FIG. 25 may be generated or used in the projection (16001 in FIG. 16, 29110 in FIG. 29a, or 30020 in FIG. 30) process of the transmission device/method (16000 of FIG. 16, 29110 in FIG. 29a, or 30000 of FIG. 30) according to the embodiments. In addition, the parameter information may be generated or used a coordinate projector 29112 of FIG. 29b.

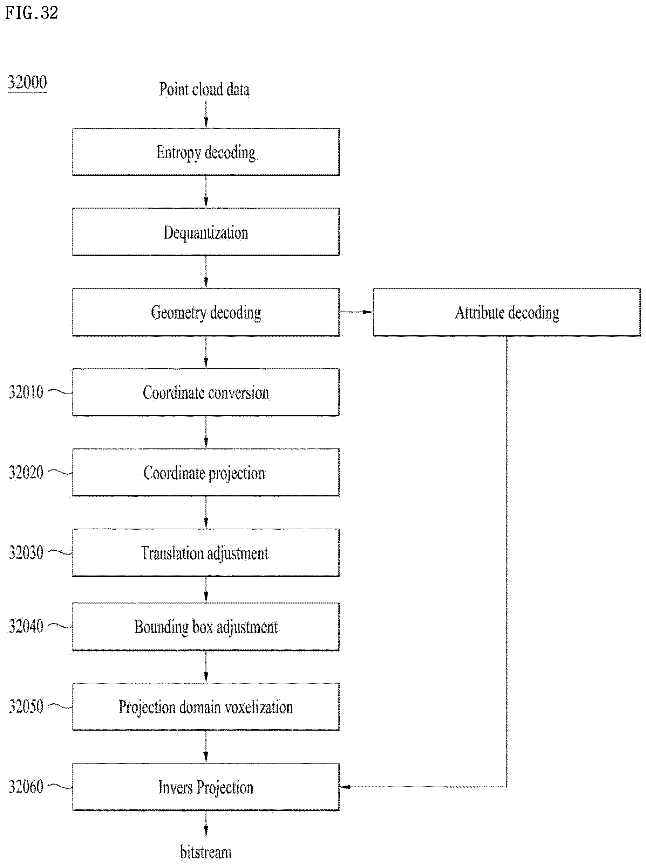

In addition, the parameter information illustrated in FIG. 25 may be received by the receiver (13000 in FIG. 13) according to the embodiments and parsed by the metadata parser (13006 in FIG. 13) according to the embodiments. In addition, the parameter information may be used in the projection (17001 in FIG. 17, 31110 in FIG. 31b, or 32020 in FIG. 32) or inverse projection (17002 in FIG. 17, 31130 in FIG. 31b, or 32060 in FIG. 32) process of the reception device/method (17000 of FIG. 17, 31100 of FIG. 31a, or 32000 of FIG. 32) according to the embodiments.

The transmission and reception devices/methods according to the embodiments have an advantage of decoding and encoding point cloud data using a proper scheme according to distribution of acquired point cloud data by transmitting and receiving information about the LiDAR sensor that has acquired point cloud data, information about the scan pattern of the LiDAR sensor, and information about the scan range (or FoV range) of the LiDAR sensor.

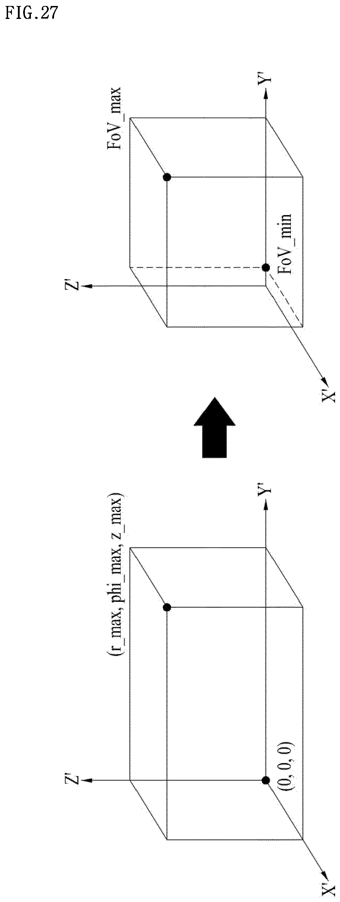

FIG. 27 illustrates a change in a bounding box based on information about an FoV range of a LiDAR sensor according to embodiments.

FoV information (or scan range of the LiDAR sensor) according to the embodiments may be used as values for estimating an offset and a bounding box of coordinate conversion. When performing coordinate conversion, the performance of coordinate conversion may be adjusted through a scale parameter, which is determined based on distribution of points of each axis of the converted domain.

When calculating the bounding box and calculating the length over which points are distributed for each axis, processing is possible only when all points are transmitted. As a low-delay method, the range of the bounding box may be set to a predetermined range (0, 0, 0) to (radius max, $2\pi$, laser ID max). In this case, low-latency processing is possible because there is no need to calculate bboxf. However, if the distribution of points occupies only a portion of the bounding box, compression efficiency may be reduced due to inaccurate scale.

Therefore, a predefined offset may be transmitted, or a range that is be known in advance by characteristics of the LiDAR sensor may be transmitted. FIG. 27 illustrates a change in a bounding box when the FoV is limited. By identifying the distribution range of data based on information about the transmitted FoV range of the LiDAR (or scan range of the LiDAR), a delay factor consumed to directly obtain point distribution characteristics may be eliminated and point-by-point processing may be possible.

In other words, since the transmission and reception devices/methods according to embodiments may determine the distribution range of projected point cloud data after projection based on the FoV information of the LiDAR sensor without directly calculating the distribution range of the projected point cloud data, decoding efficiency may be increased.

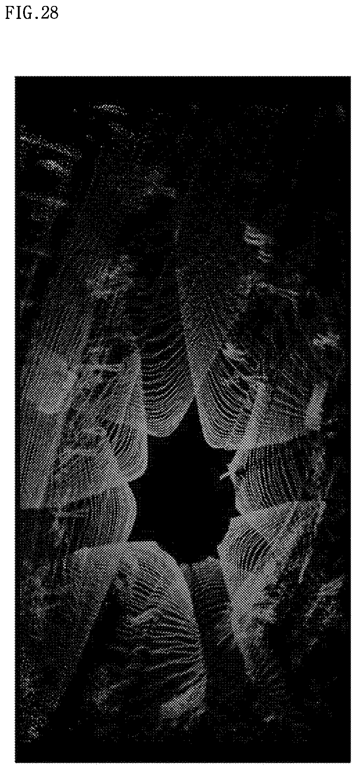

FIG. 28 illustrates an example in which point cloud data acquired by a plurality of LiDAR sensors according to embodiments are synthesized.

LiDAR sensor-related information according to embodiments may be used to synthesize point cloud data. FIG. 28 is an example of synthetization of point cloud data obtained by multiple LiDARs with a limited FoV. Information fused into data acquired from each LiDAR sensor or information acquired from each LiDAR sensor may be transmitted. When fusing the data acquired from each LiDAR sensor, the LiDAR sensor-related information (e.g., FoV range information) according to the embodiments may be used.

If the processing speed of the reception device is faster than that of the transmission device, or if the reception device considers only part of total information, only the necessary information may be transmitted to the reception device. In this case, the range of point cloud data needs to be transmitted. When considering coordinate conversion, the distribution range of data may be identified by the reception device through the LiDAR sensor-related information (e.g., FoV-related information). In addition, when the sensor-related information is transmitted through a plurality of streams and partial decoding is performed, the LiDAR sensor-related information according to the embodiments may be used to distinguish a bitstream that matches information about directionality required by the reception device.

In addition, when data acquired by a plurality of LiDAR sensors independent of each other is transmitted (e.g., when LiDARs with a limited FoV are installed in respective vehicles), the LiDAR sensor-related information according to the embodiments may be used for a method to previously inform the directionality and range of the acquired data. In this case, the LiDAR sensor-related information may be used to transmit the characteristics of the LiDARs or may be used to transmit the characteristics of content.

FIGS. 29a and 29b exemplarily illustrate a point cloud data transmission device/method according to embodiments. FIGS. 29a and 29b illustrate the point cloud data transmission method as a flowchart and, simultaneously, illustrate the point cloud data transmission device including components for performing each operation.

The transmission device 29000 according to the embodiments may acquire point cloud data by the transmission device 10000 in FIG. 1, the transmission device of FIG. 4, the transmission device of FIG. 12, the XR device 1430 in FIG. 14, the transmission device 16000 of FIG. 16, and/or hardware, which includes one or more processors or integrated circuits configured to communicate with one or more memories, software, firmware, or a combination of hardware, software, and firmware and encode and then transmit the point cloud data.

The transmission device 29000 includes an encoder that encodes point cloud data and a transmitter that transmits a bitstream including the encoded point cloud data. The encoder may include a geometry encoder that encodes geometry representing the positions of one or more points of the point cloud data, and an attribute encoder that encodes attributes of one or more points.

In addition, the encoder may include a projector 29100 that projects the points of the point cloud data. The projector 29100 of the transmission device 29000 may convert coordinate values indicating the positions of the points into coordinate values of other coordinates and project the points based on the converted coordinates values of the points. For example, the projector 29100 may convert coordinate values of a point expressed as Cartesian coordinates or XYZ Cartesian coordinates (first coordinates) into coordinate values of at least one of cylindrical coordinates, spherical coordinates, or circular-sector-shaped coordinates (second coordinates). The projector 29100 projects the point on Cartesian coordinates having X', Y', and Z' axes based on coordinate values of the point expressed as the second coordinates. As a result, while the point is located on the Cartesian coordinates (X', Y', Z') based on values (e.g., r, theta, phi) converted into the second coordinates, a position on the existing spatial coordinates of the point and a position on X', Y', Z' spatial coordinates are different. The first coordinates or the second coordinates may include at least one of the Cartesian coordinates, the cylindrical coordinates, the spherical coordinates, or the circular-sector-shaped coordinates.

Geometry information projected by the projector 29100 may be delivered to the attribute encoder. That is, geometry information used for attribute coding may have been projected. Additionally, attribute data which is sub-sampled based on a sub-sampled geometry may be encoded. The projector 29100 may generate related information (e.g., geo_projection_enable_flag and/or attr_projetion_enable_flag) according to a projection application range and transmit the generated information to the reception device according to the embodiments. Projection of the point cloud data may be applied to geometry coding and/or attribute coding.

FIG. 29b is a block diagram illustrating the projector 29100 according to embodiments in more detail. The projector 29100 according to embodiments may include a coordinate converter 29111, a coordinate projector 29112, a laser position adjuster 29113, a sampling rate adjuster 29114, or a voxelizer 29115.

The coordinate converter 29111 converts coordinate values representing a position of input point cloud data. For example, the coordinate converter 29111 may convert the positions of points expressed as the XYZ rectangular coordinates (e.g., Cartesian coordinates) into positions of the cylindrical coordinates, the spherical coordinates, or the circular-sector-shaped coordinates. In this case, the coordinate converter 29111 may generate information about a distribution range of the input point cloud data (e.g., orig_bounding_box_x_offset, orig bounding box_y offset, orig_bounding_box_z_offset, orig_bounding_box_x_length, orig bounding box_y length, and/or orig_bounding_box_z_length) and transmit the information to the reception device according to the embodiments. In addition, the coordinate converter 29111 may generate, as information about the converted coordinates, information about a center position and a distribution range of data (e.g., cylinder_center_x/y/z, cylinder_radius_max, cylinder_degree_max, cylinder_z_max, ref_vector_x/y/z, normal_vector_x/y/z, and/or clockwise_degree_flag) in the converted coordinates and transmit the information to the reception device according to the embodiments. As the information about the distribution range of data, the LiDAR information described with reference to FIG. 27 may be generated or used and may be transmitted to the reception device according to the embodiments.

The coordinate projector 29112 is a component that projects points of point cloud data expressed through coordinate conversion. The coordinate projector 29112 may generate information about the range and scaling of the projected point cloud data (e.g., bounding_box_x/y/z_length and/or granularity_radius/angular/normal) and transmit the generated information to the reception device according to the embodiments. As the information about the distribution range of data, the LiDAR information described with reference to FIG. 27 may be generated or used and may be transmitted to the reception device according to the embodiments.

The content of coordinate conversion and projection described above may be performed by the coordinate converter 29111 or the coordinate projector 29112 described above.

The laser position adjustor 29113 performs an adjustment process based on characteristics according to the position of a laser in the structure of a LiDAR sensor. When laser_position_adjustment_flag is 1, the laser position adjustor 29113 may generate information necessary for adjustment, such as num_laser, r_laser, z_laser, and theta_laser and transmit the information to the reception device according to the embodiments. The above-described content related to projection adjustment considering the position of the laser may be performed by the laser position adjustor 29113.

The sampling rate adjustor 29114 may perform sampling rate adjustment for each axis. The sampling rate adjustor 29114 may generate sampling adjustment-related information (e.g., sampling_adjustment_cubic_flag, sampling_adjustment_spread_bbox_flag, and/or sampling_adjustment_type) and transmit the information to the reception device according to the embodiments. In addition, the sampling rate adjustor 29114 may convert an azimuthal angle or an elevation angle into an azimuthal index or a laser index. That is, the sampling rate adjustor may perform adjustment by approximating or quantizing the azimuthal angle or the elevation angle of points. Operation related to adjustment through index conversion, approximation, or quantization of an azimuthal angle or elevation angle of a point of point cloud data may be performed by the sampling rate adjustor 29114 according to the embodiments. That is, the projector 29110 according to the embodiments may perform sampling adjustment through coordinate conversion, projection and index conversion, approximation, or quantization of the point cloud data.

An existing point cloud coding scheme may be used for final configured point cloud data. In this case, point cloud data used for attribute compression may use projected point cloud data rather than original data, and sub-sampled attribute data may be compressed based on sub-sampled geometry. In this case, that the projected point cloud data has been used for geometry coding/attribute coding may be indicated through geo_projection_enable_flag and attr_projection_enable_flag depending on a range to which converted data is applied. If projection is applied only to attribute coding, the existing coding scheme may be applied to location information, the resulting location may be projected, and then attribute coding may be performed.

FIG. 30 illustrates an example of a point cloud data transmission method according to embodiments.

The point cloud data transmission method according to the embodiments may correspond to an operation of acquiring, encoding, and then transmitting point cloud data by the transmission device 10000 in FIG. 1, transmission 20002 in FIG. 2, the transmission device of FIG. 4, the transmission device of FIG. 12, the XR device 1430 in FIG. 14, the transmission device 16000 of FIG. 16, and/or hardware, which includes one or more processors or integrated circuits configured to communicate with one or more memories, software, firmware, or a combination of hardware, software, and firmware.

FIG. 30 illustrates an operation of encoding point cloud data. Encoding the point cloud data includes encoding geometry of points of the point cloud data and encoding attributes of the points of the point cloud data.

Encoding the point cloud data includes projecting the points of the point cloud data. Projecting the points of the point cloud data includes an operation 30010 of converting coordinates representing the positions of points expressed as first coordinates into second coordinates and an operation 30020 of projecting the points based on the coordinates of the points converted into and expressed as the second coordinates.

The operating 30010 of converting the coordinates corresponds to an operation performed by the coordinate converter 29111 according to the embodiments, and the operation 30020 of projecting the points corresponds to an operation performed by the coordinate projector 29112 according to the embodiments. Additionally, the projecting operation may further include an operation 30030 of adjusting the point cloud data based on the position of a laser and an operation 30040 of adjusting a sampling rate. The operation 30030 of adjusting the point cloud data based on the position of the laser corresponds to an operation performed by the laser position adjuster 29113 according to the embodiments, and the operation 30040 of adjusting the sampling rate may correspond to an operation performed by the sampling rate adjuster 29114 according to the embodiments. Each operation may correspond to the operation of each component of the transmission device 29000, and a description related to the operation of each component will be given in FIGS. 16 to 29.

FIGS. 31a and 31b exemplarily illustrate a point cloud data reception device/method according to embodiments. FIGS. 31a and 31b illustrate the point cloud data reception method as a flowchart and, simultaneously, illustrate the point cloud data reception device including components for performing each operation.

The reception device 31000 according to the embodiments may receive and decode point cloud data by the reception device 10004 in FIG. 1, the reception device of FIG. 11, the reception device of FIG. 13, the XR device 1430 in FIG. 14, the reception device 17000 of FIG. 17, and/or hardware, which includes one or more processors or integrated circuits configured to communicate with one or more memories, software, firmware, or a combination of hardware, software, and firmware.

The reception device 31000 according to the embodiments may include a receiver that receives a bitstream including point cloud data and a decoder that decodes the point cloud data. The decoder may include a geometry decoder that decodes geometry representing the positions of one or more points of the point cloud data, and an attribute decoder that decodes attributes of the one or more points.

Decoding according to embodiments may arithmetic-decode and de-quantize a bitstream to restore point cloud data. Existing point cloud data may be decoded regardless of whether the point cloud data is projected.

Referring to FIG. 31b, the decoder includes the re-projector 31110 that projects projected point cloud data. The re-projector 31110 may include a coordinate converter and a coordinate projector. Coordinate conversion and coordinate projection performed by the re-projector 31110 may correspond to coordinate conversion and coordinate projection of the projector 29110 of FIG. 29 and may be referred to as a projector.

The coordinate projector projects a point of the point cloud data. The coordinate projector may re-convert decoded point cloud data (X'Y'Z' coordinates) in a 3-dimensional space according to coordinate_conversion_type and receive and discern information about the range and scaling of the projected data (e.g., cylinder_center_x/y/z, cylinder_radius_max, cylinder_degree_max, cylinder_z_max, ref_vector_x/y/z, and/or normal_vector_x/y/z, clockwise_degree_flag). As the information about the distribution range of data, the LiDAR information described with reference to FIG. 27 may be transmitted by the transmission device and be used.

The coordinate converter converts coordinates of the point of the point cloud data. For example, the coordinate converter may convert cylindrical coordinates into XYZ Cartesian coordinates and receive projection_type to acquire a method used for projection. In this case, the distribution range of the output point cloud data may be discerned through related information (e.g., orig_bounding_box_x/y/z_offset and/or orig_bounding_box_x/y/z_length). In addition, the coordinate converter may discern information about coordinates to be converted (e.g., cylinder_center_x/y/z, cylinder_radius_max, cylinder_degree_max, cylinder_z_max, ref_vector_x/y/z, normal_vector_x/y/z, and/or clockwise_degree_flag) through signaling information. As the information about the distribution range of data, the LiDAR information described with reference to FIG. 27 may be transmitted by the transmission device and be used.

The re-projector 31110 may or may not perform coordinate conversion and projection depending on whether received point cloud data has been projected. The received point cloud data may be projected point cloud data by the transmission device according to the embodiments or may not be the projected point cloud data. Coordinates expressing the position of a point of point cloud data may be at least one of the Cartesian coordinates, the cylindrical coordinates, the spherical coordinates, or the circular-sector-shaped coordinates, and the position of the point of the point cloud data may be expressed by other coordinates through coordinate conversion. The position of the point of the point cloud data may be projected based on values expressed as converted coordinates.

The re-projector 31110 may further include a laser position adjustor (not illustrated) and a sampling rate adjustor (not illustrated).

The laser position adjustor performs an adjustment process based on characteristics according to the position of a laser in a LiDAR sensor structure. When laser_position_adjustment_flag is 1, the laser position adjustor may acquire information necessary for adjustment, such as num_laser, r_laser, z_laser, and theta_laser. Projection adjustment considering the position of a laser may be performed by the laser position adjustor

The sampling rate adjustor may perform sampling rate adjustment for each axis. The sampling rate adjustor may receive information about sampling adjustment (e.g., sampling_adjustment_cubic_flag, sampling_adjustment_spread_bbox_flag, and/or sampling_adjustment_type) and perform sampling adjustment.

The decoder may include an index map generator 31120 and an inverse projector 31130.

The index map generator 31120 may generate an index map for reconstructed geometry (position) information. Map generation between the positions of projected points, position indexes, and decoded positions may be performed by the index map generator 31120

The inverse projector 31130 is a component that changes attribute information reconstructed as an attribute with respect to a projected geometry into a domain for geometry information reconstructed to an original position. Inverse projection may identically perform the projection process of point cloud data. Inverse projection may convert the position of a point of the point cloud data into original coordinates from projected coordinates using an inverse projection equation. When projection is applied to attribute coding, attribute information is matched to an appropriate value and reconstructed by connecting the reconstructed geometry information to corresponding attribute information.

The decoder may further include the inverse projector 31130 that inversely projects the positions of projected points of the point cloud data.

FIG. 32 illustrates an example of a point cloud data reception method according to embodiments

Referring to FIG. 32, an operation 32000 of decoding point cloud data according to embodiments is illustrated. The decoding operation includes decoding geometry representing the position of the point cloud data and decoding an attribute of a point.

Decoding the point cloud data further includes converting coordinates and projecting the coordinates. Converting the coordinates may include converting coordinates of a point of the point cloud data. The operation of converting the coordinates corresponds to an operation performed by the coordinate converter of the reception device 31110. The operation of projecting the coordinates includes projecting a point of the point cloud data. The operation of projecting the coordinates corresponds to an operation performed by the coordinate projector of the reception device 31110.

The decoding operation may further include adjusting projection in consideration of a position of a laser and adjusting projection in consideration of a sampling rate. An operation performed in each procedure corresponds to an operation performed by the laser position adjustor (not illustrated) and the sampling rate adjustor (not illustrated) of the reception device 31110 according to the embodiments, and details related thereto are omitted because the description has been given above.

The decoding operation 67000 may further include inversely projecting the point cloud data. In the inverse projection operation, attribute information reconstructed as an attribute with respect to a projected geometry is changed into a domain for reconstructed geometry information. The operation performed in the inverse projection operation may correspond to the operation performed by the inverse projector 31130 of the reception device 31110 according to the embodiments

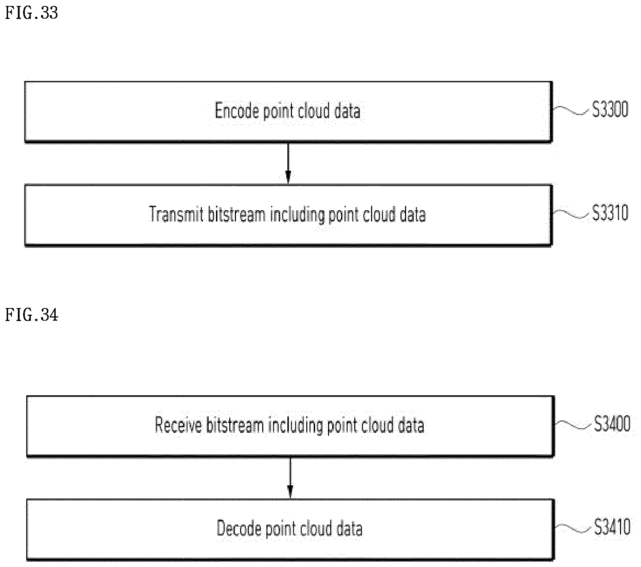

FIG. 33 illustrates an example of a point cloud data transmission method according to embodiments.

The point cloud data transmission method according to embodiments includes acquiring point cloud data, encoding the point cloud data (S3300), and transmitting a bitstream including the encoded point cloud data (S3310).

Acquiring the point cloud data includes acquiring the point cloud data by point cloud video acquisition 10001 in FIG. 1, acquisition 20000 in FIG. 2, the data input unit 12000, and/or hardware, which includes one or more processors or integrated circuits configured to communicate with one or more memories, software, firmware, or a combination of hardware, software, and firmware. Acquiring the point cloud data may include acquiring information about a LiDAR sensor that acquires the point cloud data.

Encoding the point cloud data (S3300) includes encoding the point cloud data by the point cloud video encoder 10002 in FIG. 1, encoding 20001 in FIG. 2, the encoder of FIG. 4, the transmission device of FIG. 12, the XR device 1430 in FIG. 14, the transmission device of FIG. 16, and/or hardware, which includes one or more processors or integrated circuits configured to communicate with one or more memories, software, firmware, or a combination of hardware, software, and firmware.

Transmitting the bitstream including the point cloud data (S3310) includes transmitting the point cloud data as in transmission 20002 of FIG. 2 by the transmitter 10003 in FIG. 1, the transmission processor 12012 in FIG. 12, the XR device 1430 in FIG. 14, the transmission device 1600 of FIG. 16, and/or hardware, which includes one or more processors or integrated circuits configured to communicate with one or more memories, software, firmware, or a combination of hardware, software, and firmware.

Encoding the point cloud data (S3300) includes encoding geometry of the point cloud data and encoding an attribute of the point cloud data.

In addition, encoding the point cloud data (S3300) may include projecting the point cloud data. Projecting the point cloud data may include projecting the point cloud data by projection 16001 in FIG. 16, the projector 29110 in FIG. 29a, or the coordinate projector 30030 in FIG. 30. In addition, projecting the point cloud data may include estimating a distribution range of the point cloud data based on sensor information (e.g., LiDAR_info of FIG. 25) related to a sensor that has acquired the point cloud data. Therefore, bounding box information or information about maximum and/or minimum data for each coordinate axis of the projected point cloud data may be estimated based on the sensor information.

Referring to FIG. 26, a bitstream according to embodiments includes sensor information related to a sensor that has acquired point cloud data. The sensor that acquires the point cloud data may include a LiDAR sensor. The sensor represents a means for acquiring data and may be referred to as various terms such as a data acquirer, etc.

Referring to FIG. 25, the sensor information (e.g., LiDAR_info) may include scan pattern type information indicating a scan pattern of the sensor. The sensor information may further include flag information (e.g., LiDAR_FoV_range_flag) indicating whether information related to an FoV or scan range of the sensor is transmitted. The sensor information may further include information indicating minimum and maximum azimuth values, minimum and maximum elevation values, and minimum and maximum radius values, scanned by the sensor, in response to the flag information having a specific value. That is, the sensor information may further include information indicating a range scanned by the sensor. The scan range of the sensor may be expressed based on the range of coordinate values according to a specific coordinate system. For example, in the case of a Cartesian coordinate system, the scan range of the sensor according to the embodiments may be expressed as a range of x, y, and z values.

FIG. 34 illustrates an example of a point cloud data reception method according to embodiments.

Referring to FIG. 34, the point cloud data transmission method according to the embodiments includes receiving a bitstream including point cloud data (S3410) and decoding the point cloud data (S3420).

The reception method according to the embodiments may receive and decode point cloud data by the reception device 10004 in FIG. 1, the reception device of FIG. 11, the reception device of FIG. 13, the XR device 1430 in FIG. 14, the reception device 17000 of FIG. 17, and/or hardware, which includes one or more processors or integrated circuits configured to communicate with one or more memories, software, firmware, or a combination of hardware, software, and firmware.

Receiving the bitstream including the point cloud data (S3400) includes the point cloud data by the reception device 10004 in FIG. 1, the reception device of FIG. 10 or FIG. 11, the receiver 13000 in FIG. 13, the XR device 1430 in FIG. 14, the reception device 17000 of FIG. 17, and/or hardware, which includes one or more processors or integrated circuits configured to communicate with one or more memories, software, firmware, or a combination of hardware, software, and firmware.

Decoding the point cloud data (S3410) includes decoding the point clod data by the point cloud video decoder 10006 in FIG. 1, the reception device of FIG. 10, FIG. 11, or FIG. 13, the XR device 1430 in FIG. 14, the reception device 1700 of FIG. 17, and/or hardware, which includes one or more processors or integrated circuits configured to communicate with one or more memories, software, firmware, or a combination of hardware, software, and firmware.

Decoding the point cloud data includes decoding geometry of points of the point cloud data and decoding attributes of the points of the point cloud data.

In addition, decoding the point cloud data may include projecting the point cloud data. Projecting the point cloud data may include projecting the point cloud data by projection 17001 in FIG. 17, the projector 31110 in FIG. 31b, or the coordinate projector 32020 in FIG. 32. In addition, projecting the point cloud data may include estimating a distribution range of the point cloud data based on sensor information (e.g., LiDAR_info of FIG. 25) related to a sensor that has acquired the point cloud data. Therefore, bounding box information or information about maximum and/or minimum data for each coordinate axis of the projected point cloud data may be estimated based on the sensor information.

Referring to FIG. 25, a bitstream according to embodiments includes sensor information related to a sensor that has acquired point cloud data. The sensor that acquires the point cloud data may include a LiDAR sensor. The sensor represents a means for acquiring data and may be referred to as various terms such as a data acquirer, etc.

Referring to FIG. 25, the sensor information (e.g., LiDAR_info) may include scan pattern type information indicating a scan pattern of the sensor. The sensor information may further include flag information (e.g., LiDAR_FoV_range_flag) indicating whether information related to an FoV or scan range of the sensor is transmitted. The sensor information may further include information indicating minimum and maximum azimuth values, minimum and maximum elevation values, and minimum and maximum radius values, scanned by the sensor, in response to the flag information having a specific value. That is, the sensor information may further include information indicating a range scanned by the sensor. The scan range may be expressed based on the range of coordinate values according to a specific coordinate system. For example, in the case of a Cartesian coordinate system, the scan range of the sensor according to the embodiments may be expressed as a range of x, y, and z values.

The transmission device according to the embodiments may rearrange data based on distribution characteristics of point cloud data. Therefore, inefficiently arranged data (e.g., data type with lower density as the data is further away from a center) may be arranged in uniform distribution through projection and then compressed and transmitted with higher efficiency.

The point cloud data transmission and reception devices/methods according to the embodiments may encode attributes of point cloud data based on a projection technique. In this case, a projection coordinate configuration and a projection method based on the characteristics of an acquirer, and/or a parameter configuration considering sampling characteristics may be performed. Here, the characteristics of the acquirer may be information characteristics related to a head position of a sensor or a laser.

Due to this, the transmission and reception methods/devices according to the embodiments rearrange data using data distribution characteristics/characteristics of the acquirer based on the combination of the embodiments and/or related signaling information to achieve compression performance of data. Further, the reception method/device according to the embodiments may efficiently reconstruct the point cloud data.

The projection method according to the embodiments may be applied as a pre/post-processing process independently of attribute coding. When the projection method is applied to geometry coding, a prediction-based geometry coding method may be applied based on a pre-processing process of the prediction-based geometry coding method or on a converted position.

The point cloud data transmission and reception devices/methods according to the embodiments may encode or decode point cloud data by transmitting and receiving signaling information related to a LiDAR sensor. Therefore, encoding and decoding may be efficiently performed according to distribution characteristics of the point cloud data by delivering information about a scan pattern of the LiDAR sensor or a scan range (or FoV range) of the LiDAR sensor. The point cloud data transmission and reception devices/methods according to the embodiments may improve data processing speed, without directly calculating data distribution during coordinate conversion or coordinate projection, by estimating the distribution range of the point cloud data based on information about the LiDAR sensor.

In addition, the point cloud data transmission and reception devices/methods according to the embodiments may fuse point cloud data acquired by a plurality of LiDAR sensors with a limited scan range based on the information about the LiDAR sensor according to the embodiments. Therefore, the point cloud data obtained by various methods may be fused and then processed.

In addition, the point cloud data transmission and reception devices/methods according to the embodiments may calculate the distribution of point cloud data projected through the information about the LiDAR sensor according to the embodiments without a separate calculation process. In other words, the distribution of the point cloud data may be delivered through the information about the LiDAR sensor without the need to calculate the distribution of the point cloud data for every axis.

The point cloud data transmission and reception devices/methods according to the embodiments allow a reception side to easily determine a distribution range of data when only a portion of the point cloud data is transmitted and received and are efficient because it is easy to distinguish information that matches direction information requested by the reception side when partial decoding is performed.

Since the point cloud data transmission and reception devices/methods according to the embodiments may simply estimate data distribution by projecting the point cloud data (or converting coordinates of the point cloud data) in various embodiments, which may utilize the LiDAR sensor (e.g., detection for autonomous driving, detection of surroundings of an indoor cleaning robot, a surveillance camera, a drone device, or use in industrial facilities), and transmitting and receiving the information about the sensor during projection (or coordinate conversion), data processing efficiency is increased.

Embodiments have been described from the method and/or device perspective, and descriptions of methods and devices may be applied so as to complement each other.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same.

Executable instructions for performing the method/operations of the device according to the embodiments may be stored in a non-transitory CRM or other computer program products configured to be executed by one or more processors, or may be stored in a transitory CRM or other computer program products configured to be executed by one or more processors.

In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or a combination thereof. The firmware, software, and/or a combination thereof may be stored in the processor or the memory.

The operations according to the above-described embodiments may be performed by the transmission device and/or the reception device according to the embodiments. The transmission/reception device includes a transmitter/receiver configured to transmit and receive media data, a memory configured to store instructions (program code, algorithms, flowcharts, and/or data) for a process according to embodiments, and a processor configured to control operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

**Mode for Disclosure**

As described above, related contents have been described in the best mode for carrying out the embodiments.

**Industrial Applicability**

As described above, the embodiments may be fully or partially applied to the point cloud data transmission/reception device and system. It will be apparent to those skilled in the art that variously changes or modifications can be made to the embodiments within the scope of the embodiments. Thus, it is intended that the embodiments cover the modifications and variations of this disclosure provided they come within the scope of the appended claims and their equivalents.

**Claims**

1. A point cloud data transmission method, comprising:

   acquiring point cloud data;
   encoding the point cloud data; and
   transmitting a bitstream including the encoded point cloud data.

2. The point cloud data transmission method of claim 1, wherein the encoding the point cloud data comprises projecting the point cloud data,

   wherein the projecting the point cloud data comprises estimating a distribution range of the point cloud data based on sensor information related to a sensor that has acquired the point cloud data, and
   wherein the bitstream includes the sensor information.

3. The point cloud data transmission method of claim 2, wherein the sensor information includes scan pattern type information representing a scan pattern of the sensor.

4. The point cloud data transmission method of claim 3, wherein the sensor information further includes flag information as to whether information representing a scan range of the sensor is transmitted.

5. The point cloud data transmission method of claim 4, wherein the sensor information further includes scan range information representing the scan range of the sensor, based on the flag information having a specific value, and
   wherein the scan range information represents the scan range of the sensor as a range of coordinate values according to a specific coordinate system.

6. The point cloud data transmission method of claim 5, wherein the sensor includes a LiDAR sensor, and wherein the acquiring the point cloud data comprises acquiring the sensor information.

7. A point cloud data transmission device, comprising:

an acquirer configured to acquire point cloud data;
an encoder configured to encode the point cloud data; and
a transmitter configured to transmit a bitstream including the encoded point cloud data,
wherein the encoder includes a projector configured to project the point cloud data, and
wherein the projector estimates a distribution range of the point cloud data based on sensor information related to a sensor that has acquired the point cloud data.

8. The point cloud data transmission device of claim 7,

wherein the bitstream includes the sensor information; and
wherein the sensor information includes scan pattern type information representing a scan pattern of the sensor.

9. A point cloud data reception method, comprising:

receiving a bitstream including point cloud data; and
decoding the point cloud data,
wherein the decoding the point cloud data comprises projecting the point cloud data,
wherein the bitstream includes sensor information related to a sensor that has acquired the point cloud data, and
wherein the projecting the point cloud data comprises estimating a distribution range of the point cloud data based on the sensor information.

10. The point cloud data reception method of claim 9, wherein the sensor information includes scan pattern type information representing a scan pattern of the sensor.

11. The point cloud data reception method of claim 10, wherein the sensor information further includes flag information as to whether information representing a scan range of the sensor is transmitted.

12. The point cloud data reception method of claim 11, wherein the sensor information further includes scan range information representing the scan range of the sensor, based on the flag information having a specific value, and wherein the scan range information represents the scan range of the sensor as a range of coordinate values according to a specific coordinate system.

13. The point cloud data reception method of claim 12, wherein the sensor includes a LiDAR sensor.

14. A point cloud data reception device, comprising:

a receiver configured to receive a bitstream including point cloud data; and
a decoder configured to decode the point cloud data,
wherein the decoder comprises a projector configured to project the point cloud data,
wherein the bitstream includes sensor information related to a sensor that has acquired the point cloud data; and
wherein the projector estimates a distribution range of the point cloud data based on the sensor information.

FIG. 1

# FIG. 2

ACQUISITION (20000) — Ply File -geometry -attribute → ENCODING (20001) — ENCODED -geometry -attribute bitstream → TRANSMISSION (20002) → DECODING (20003) — DECODED -geometry -attribute → RENDERING (20004)

HEAD ORIENTATION, VIEWPORT INFORMATION

FEEDBACK (20005)

HEAD ORIENTATION, VIEWPORT INFORMATION

FIG. 3

FIG. 4

FIG. 5

FIG. 6

# FIG. 7

$$1 + 2 + 4 - 8 = 15$$

FIG. 8

Level of details

# FIG. 9

P0 P1 P4 P3
P6 P7
P9
P5 P8 P2

| Original order | P0, P1, P2, P3, P4, P5, P6, P7, P8, P9 |
|---|---|

| LOD-based order | P0, P5, P4, P2 | P1, P6, P3 | P9, P8, P7 |
|---|---|---|---|

LOD0

LOD1

LOD2

FIG. 10

# FIG. 11

geomerty
bitstream

attributes
birsrteam

11000 — Arithmerix decode

11001 — Synthesize octree

11002 — synthesize surface approximation

11003 — Reconstruct geometry

11004 — Inverse transform coordinates

position

11005 — Arithmerix decode

11006 — Inverse quantize

11007

RAHT

Gnnerate LOD — 11008

Inverse lifring — 11009

Inverse transform colors — 11010

attributes

FIG. 12

# FIG. 13

13000 — Receiver

13001 — Reception processor

13006

Geometry bitstream

Attribute bitstream

Set value, etc.

13002 — Arithmetic decoder

Metadata parser

Arithmetic decoder — 13007

13003 — Occupancy code-based octree reconstruction processor

Inverse quantization processor — 13008

13004 — Surface model processor (triangle reconstruction, up-sampling, voxelization)

Prediction /lifting/RAHT inverse transform processor — 13009

13005 — Inverse quantization processor

Color inverse transform processor — 13010

Sharing reconstructed position values

Renderer — 13011

# FIG. 14

FIG.15a

FIG.15b

FIG.15c

FIG.15d

EP 4 372 420 A1

FIG. 16

FIG.17

17000

Input Geometry bitstream → Geom. decoding → Projection (No / Yes) → Projection (17001) → Attr. decoding → Inverse projection (17002) → Reconstructed point cloud data

Input Attribute bitstream → Attr. decoding

FIG.18

FIG. 19

EP 4 372 420 A1

FIG. 19

slice 0

slice n

SPS | GPS | $APS_0$ | $APS_1$ | TPS | $Geom_0^0$ | $Attr_0^0$ | $Attr_1^0$ | $\cdots$ | $Geom_0^n$ | $Attr_0^n$ | $Attr_1^n$

Geom_slice_header | Geom_slice_data

{
Tile(0).tile_bounding_box_xyz0;
Tile(0).tile_bounding_box_whd;
......
Tile(n).tile_bounding_box_xyz0;
Tile(n).tile_bounding_box_whd;
}

{
geom_ geom_ parameter_set_id;
geom_tile_id;
geom_slice_id;
geomBoxOrigin;
geom_box_log2_scale;
geom_max_node_size_log2;
geom_num_points;
}

FIG. 20

FIG. 21

EP 4 372 420 A1

| seq_parameter_set( ) { | Descriptor |
|---|---|
| profile_compatibility_flags | u(24) |
| level_idc | u(8) |
| sps_bounding_box_present_flag | u(1) |
| if( sps_bounding_box_present_flag ) { | |
| sps_bounding_box_offset_x | se(v) |
| sps_bounding_box_offset_y | se(v) |
| sps_bounding_box_offset_z | se(v) |
| sps_bounding_box_scale_factor | ue(v) |
| sps_bounding_box_size_width | ue(v) |
| sps_bounding_box_size_height | ue(v) |
| sps_bounding_box_size_depth | ue(v) |
| } | |
| sps_source_scale_factor | u(32) |
| sps_seq_parameter_set_id | ue(v) |
| sps_num_attribute_sets | ue(v) |
| for( i = 0; i< sps_num_attribute_sets; i++ ) { | |
| attribute_dimension[ i ] | ue(v) |
| attribute_instance_id[ i ] | ue(v) |

| | Descriptor |
|---|---|
| attribute_bitdepth[ i ] | ue(v) |
| attribute_cicp_colour_primaries[ i ] | ue(v) |
| attribute_cicp_transfer_characteristics[ i ] | ue(v) |
| attribute_cicp_matrix_coeffs[ i ] | ue(v) |
| attribute_cicp_video_full_range_flag[ i ] | u(1) |
| known_attribute_label_flag[ i ] | u(1) |
| if( known_attribute_label_flag[ i ] ) | |
| known_attribute_label[ i ] | ue(v) |
| else | |
| attribute_label_four_bytes[ i ] | u(32) |
| } | |
| projection_flag | u(1) |
| if(projection_flag) | |
| projection_info ( ) | |
| sps_extension_present_flag | u(1) |
| if( sps_extension_present_flag ) | |
| while( more_data_in_byte_stream( ) ) | |
| sps_extension_data_flag | u(1) |
| byte_alignment( ) | |
| } | |

FIG.22

| tile_inventory( ) { | Descriptor |
|---|---|
| num_tiles | ue(v) |
| for( i = 0; i < num_tiles; i++ ) { | |
| tile_bounding_box_offset_x[ i ] | se(v) |
| tile_bounding_box_offset_y[ i ] | se(v) |
| tile_bounding_box_offset_z[ i ] | se(v) |
| tile_bounding_box_size_width[ i ] | ue(v) |
| tile_bounding_box_size_height[ i ] | ue(v) |
| tile_bounding_box_size_depth[ i ] | ue(v) |
| projection_flag | u(1) |
| if(projection_flag) | |
| projection_info ( ) | |
| LiDAR_info_present_flag | u(1) |
| if(LiDAR_info_present_flag) | |
| LiDAR_info() | |
| } | |
| byte_alignment( ) | |
| } | |

FIG.23

| general_attribute_slice_bitstream( ) { | Descriptor |
|---|---|
| attribute_slice_header( ) | |
| attribute_slice_data( ) | |
| } | |

| attribute_slice_header( ) { | Descriptor |
|---|---|
| ash_attr_parameter_set_id | ue(v) |
| ash_attr_sps_attr_idx | ue(v) |
| ash_attr_geom_slice_id | ue(v) |
| if ( aps_slice_qp_delta_present_flag ) { | |
| ash_qp_delta_luma | se(v) |
| ash_qp_delta_chroma | se(v) |
| } | |
| projection_flag | u(1) |
| if(projection_flag) | |
| projection_info ( ) | |
| LiDAR_info_present_flag | u(1) |
| if(LiDAR_info_present_flag) | |
| LiDAR_info() | |
| byte_alignment( ) | |
| } | |

FIG.24a

| projection_info ( ) { | Descriptor |
|---|---|
| projection_info_id | ue(v) |
| coord_conversion_type | u(4) |
| projection_type | u(4) |
| laser_position_adjustment_flag | u(1) |
| if(laser_position_adjustment_flag) { | |
| num_laser | u(8) |
| for( i=0; i<num_laser; i++) { | |
| r_laser[i] | ue(v) |
| z_laser[i] | ue(v) |
| theta_laser[i] | ue(v) |
| } | |
| } | |
| sampling_adjustment_cubic_flag | u(1) |
| sampling_adjustment_spread_bbox_flag | u(1) |
| sampling_adjustment_type | u(4) |
| geo_projection_enable_flag | u(1) |
| attr_projetion_enable_flag | u(1) |
| bounding_box_x_offset | ue(v) |
| bounding_box_y_offset | ue(v) |
| bounding_box_z_offset | ue(v) |
| bounding_box_x_length | ue(v) |
| bounding_box_y_length | ue(v) |
| bounding_box_z_length | ue(v) |
| orig_bounding_box_x_offset | ue(v) |
| orig_bounding_box_y_offset | ue(v) |
| orig_bounding_box_z_offset | ue(v) |
| orig_bounding_box_x_length | ue(v) |
| orig_bounding_box_y_length | ue(v) |
| orig_bounding_box_z_length | ue(v) |
| rotation_yaw | ue(v) |
| rotation_pitch | ue(v) |
| rotation_roll | ue(v) |

FIG.24b

| | |
|---|---|
| cylinder_center_x | ue(v) |
| cylinder_center_y | ue(v) |
| cylinder_center_z | ue(v) |
| cylinder_radius_max | ue(v) |
| cylinder_degree_max | ue(v) |
| cylinder_z_max | ue(v) |
| ref_vector_x | ue(v) |
| ref_vector_y | ue(v) |
| ref_vector_z | ue(v) |
| normal_vector_x | ue(v) |
| normal_vector_y | ue(v) |
| normal_vector_z | ue(v) |
| clockwise_degree_flag | u(1) |
| granurality_radius | ue(v) |
| granurality_angular | ue(v) |
| granurality_normal | ue(v) |
| } | |
| else if (coord_conversion_type == 1 \|\| coord_conversion_type == 3) { | |
| cylinder_center_x | ue(v) |
| cylinder_center_y | ue(v) |
| cylinder_center_z | ue(v) |
| cylinder_radius_max1 | ue(v) |
| cylinder_radius_max2 | ue(v) |
| cylinder_degree_max1 | ue(v) |
| cylinder_degree_max2 | ue(v) |
| cylinder_z_max | ue(v) |
| ref_vector_x | ue(v) |
| ref_vector_y | ue(v) |
| ref_vector_z | ue(v) |
| normal_vector_x | ue(v) |
| normal_vector_y | ue(v) |
| normal_vector_z | ue(v) |
| granurality_radius | ue(v) |
| granurality_angular | ue(v) |
| granurality_normal | ue(v) |
| } | |
| } | |

FIG.25

| LiDAR_info ( ) { | Descriptor |
|---|---|
| LiDAR_info_id | ue(v) |
| LiDAR_scan_pattern_type | u(4) |
| LiDAR_FoV_range_flag | u(1) |
| if(LiDAR_FoV_range_flag) { | |
| LiDAR_FoV_azimuth_min | u(8) |
| LiDAR_FoV_azimuth_max | u(8) |
| LiDAR_FoV_elevation_min | u(8) |
| LiDAR_FoV_elevation_max | u(8) |
| LiDAR_FoV_radius_min | u(8) |
| LiDAR_FoV_radius_max | u(8) |
| } | |
| } | |
| | |
| | |

FIG.26

FIG.27

FIG.28

FIG. 29a

EP 4 372 420 A1

FIG.29b

reconstructed
geom.
data

→

29111 — coordinate
conversion

↓

29112 — coordinate
projection

↓

29113 — Laser position
adjustment

29110

↓

29114 — sampling rate
adjustment

↓

29115 — dequantization
domain
voxelization

↓

projected
geom.
data

FIG.30

30000

Point cloud data

↓

| Geometry encoding |

↓

| Geometry decoding |

↓

| Recoloring |

↓ Geometry data

30010 — | Coordinate conversion |

↓

30020 — | Coordinate projection |

↓

30030 — | Laser position adjustment |

↓

30040 — | Sampling rate adjustment |

↓

30050 — | Projection domain voxelization |

↓

| Attribute coding |

↓

| Entropy coding |

↓

bitstream

FIG. 31a

FIG.31b

FIG.32

32000

Point cloud data

Entropy decoding

Dequantization

Geometry decoding → Attribute decoding

32010 — Coordinate conversion

32020 — Coordinate projection

32030 — Translation adjustment

32040 — Bounding box adjustment

32050 — Projection domain voxelization

32060 — Invers Projection

bitstream

FIG.33

| Encode point cloud data | S3300 |

↓

| Transmit bitstream including point cloud data | S3310 |

FIG.34

| Receive bitstream including point cloud data | S3400 |

↓

| Decode point cloud data | S3410 |

| INTERNATIONAL SEARCH REPORT | International application No. |
| --- | --- |
| | **PCT/KR2022/010283** |

**A. CLASSIFICATION OF SUBJECT MATTER**

**G01S 17/894**(2020.01)i; **G01S 7/497**(2006.01)i; **G06T 7/593**(2017.01)i; **G06T 7/521**(2017.01)i; **H04N 13/204**(2018.01)i

According to International Patent Classification (IPC) or to both national classification and IPC

**B. FIELDS SEARCHED**

Minimum documentation searched (classification system followed by classification symbols)

G01S 17/894(2020.01); G06T 9/00(2006.01); H04N 19/70(2014.01); H04N 19/91(2014.01); H04N 19/96(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드 데이터(point cloud data), 인코딩(encoding), 디코딩(decoding), 비트스트림(bitstream), 프로젝션(projection), 센서 정보(sensor information), 스캔 패턴(scan pattern), 라이다(LIDAR)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2021-0005517 A (LG ELECTRONICS INC.) 14 January 2021 (2021-01-14)<br>See paragraphs [0023]-[0139], claims 6 and 11 and figures 1-63. | 1 |
| A | | 2-14 |
| A | WO 2020-185578 A1 (VID SCALE, INC.) 17 September 2020 (2020-09-17)<br>See claim 1 and figures 1A-7. | 1-14 |
| A | KR 10-2020-0092418 A (SAMSUNG ELECTRONICS CO., LTD.) 03 August 2020 (2020-08-03)<br>See claim 1 and figures 3-10. | 1-14 |
| A | KR 10-2021-0030440 A (HUAWEI TECHNOLOGIES CO., LTD.) 17 March 2021 (2021-03-17)<br>See claim 1 and figures 1-5. | 1-14 |
| A | KR 10-2020-0109334 A (BLACKBERRY LIMITED) 22 September 2020 (2020-09-22)<br>See claim 1 and figures 1-3. | 1-14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 November 2022** | **02 November 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2"><b>INTERNATIONAL SEARCH REPORT</b><br>Information on patent family members</td><td colspan="2">International application No.<br><br><b>PCT/KR2022/010283</b></td></tr>
<tr><td>Patent document<br>cited in search report</td><td>Publication date<br>(day/month/year)</td><td>Patent family member(s)</td><td>Publication date<br>(day/month/year)</td></tr>
<tr><td>KR  10-2021-0005517  A</td><td>14 January 2021</td><td>KR  10-2021-0005524  A</td><td>14 January 2021</td></tr>
<tr><td></td><td></td><td>KR      10-2292195  B1</td><td>24 August 2021</td></tr>
<tr><td></td><td></td><td>KR      10-2334629  B1</td><td>06 December 2021</td></tr>
<tr><td></td><td></td><td>US      11017591  B2</td><td>25 May 2021</td></tr>
<tr><td></td><td></td><td>US      11170556  B2</td><td>09 November 2021</td></tr>
<tr><td></td><td></td><td>US   2021-0005006  A1</td><td>07 January 2021</td></tr>
<tr><td></td><td></td><td>US   2021-0005016  A1</td><td>07 January 2021</td></tr>
<tr><td></td><td></td><td>WO   2021-002633  A2</td><td>07 January 2021</td></tr>
<tr><td></td><td></td><td>WO   2021-002633  A3</td><td>25 February 2021</td></tr>
<tr><td></td><td></td><td>WO   2021-002657  A1</td><td>07 January 2021</td></tr>
<tr><td>WO    2020-185578  A1</td><td>17 September 2020</td><td>CN     113557741  A</td><td>26 October 2021</td></tr>
<tr><td></td><td></td><td>EP       3935857  A1</td><td>12 January 2022</td></tr>
<tr><td></td><td></td><td>JP    2022-524130  A</td><td>27 April 2022</td></tr>
<tr><td></td><td></td><td>KR  10-2021-0146897  A</td><td>06 December 2021</td></tr>
<tr><td></td><td></td><td>TW     202046733  A</td><td>16 December 2020</td></tr>
<tr><td>KR  10-2020-0092418  A</td><td>03 August 2020</td><td>CN     111512342  A</td><td>07 August 2020</td></tr>
<tr><td></td><td></td><td>EP       3721413  A1</td><td>14 October 2020</td></tr>
<tr><td></td><td></td><td>US      10783668  B2</td><td>22 September 2020</td></tr>
<tr><td></td><td></td><td>US   2019-0197739  A1</td><td>27 June 2019</td></tr>
<tr><td></td><td></td><td>WO   2019-125010  A1</td><td>27 June 2019</td></tr>
<tr><td>KR  10-2021-0030440  A</td><td>17 March 2021</td><td>BR   112021000366  A2</td><td>06 April 2021</td></tr>
<tr><td></td><td></td><td>CN     110719497  A</td><td>21 January 2020</td></tr>
<tr><td></td><td></td><td>CN     110719497  B</td><td>22 June 2021</td></tr>
<tr><td></td><td></td><td>EP       3813377  A1</td><td>28 April 2021</td></tr>
<tr><td></td><td></td><td>JP    2021-524642  A</td><td>13 September 2021</td></tr>
<tr><td></td><td></td><td>SG   11202100255  A</td><td>25 February 2021</td></tr>
<tr><td></td><td></td><td>US   2021-0183110  A1</td><td>17 June 2021</td></tr>
<tr><td></td><td></td><td>WO   2020-011265  A1</td><td>16 January 2020</td></tr>
<tr><td>KR  10-2020-0109334  A</td><td>22 September 2020</td><td>CN     111615792  A</td><td>01 September 2020</td></tr>
<tr><td></td><td></td><td>CN     112789803  A</td><td>11 May 2021</td></tr>
<tr><td></td><td></td><td>CN     112789804  A</td><td>11 May 2021</td></tr>
<tr><td></td><td></td><td>EP       3514966  A1</td><td>24 July 2019</td></tr>
<tr><td></td><td></td><td>EP       3514967  A1</td><td>24 July 2019</td></tr>
<tr><td></td><td></td><td>EP       3514967  B1</td><td>08 September 2021</td></tr>
<tr><td></td><td></td><td>EP       3514968  A1</td><td>24 July 2019</td></tr>
<tr><td></td><td></td><td>EP       3937140  A1</td><td>12 January 2022</td></tr>
<tr><td></td><td></td><td>JP    2022-501744  A</td><td>06 January 2022</td></tr>
<tr><td></td><td></td><td>JP    2022-503986  A</td><td>12 January 2022</td></tr>
<tr><td></td><td></td><td>KR  10-2021-0068040  A</td><td>08 June 2021</td></tr>
<tr><td></td><td></td><td>KR  10-2021-0068041  A</td><td>08 June 2021</td></tr>
<tr><td></td><td></td><td>US   2021-0004992  A1</td><td>07 January 2021</td></tr>
<tr><td></td><td></td><td>US   2021-0343046  A1</td><td>04 November 2021</td></tr>
<tr><td></td><td></td><td>US   2021-0350583  A1</td><td>11 November 2021</td></tr>
<tr><td></td><td></td><td>WO   2019-140510  A1</td><td>25 July 2019</td></tr>
<tr><td></td><td></td><td>WO   2020-070191  A1</td><td>09 April 2020</td></tr>
<tr><td></td><td></td><td>WO   2020-070192  A1</td><td>09 April 2020</td></tr>
</table>

Form PCT/ISA/210 (patent family annex) (July 2022)